# EUROPÄISCHE PATENTSCHRIFT

(11) **EP 3 969 217 B1**
(45) Veröffentlichungstag und Bekanntmachung des Hinweises auf die Patenterteilung: **26.07.2023**
(21) Anmeldenummer: 20726098.5
(22) Anmeldetag: 14.05.2020
(51) Int. Cl.: B23D 47/02, B27B 5/22, B27B 27/08, B27B 27/10, B23D 59/00

(54) **QUERTISCH FÜR EINE HOLZBEARBEITUNGSMASCHINE UND HOLZBEARBEITUNGSMASCHINE MIT EINEM DERARTIGEN QUERTISCH, SOWIE VERFAHREN ZUR STEURUNG EINER HOLZBEARBEITUNGSMASCHINE**
TRANSVERSAL TABLE FOR A WOODWORKING MACHINE AND WOODWORKING MACHINE HAVING SUCH A TRANSVERSAL TABLE, AND METHOD FOR CONTROLLING A WOODWORKING MACHINE
TABLE TRANSVERSALE POUR UNE MACHINE D'USINAGE DU BOIS, ET MACHINE D'USINAGE DU BOIS COMPRENANT UNE TABLE TRANSVERSALE DE CE TYPE, ET PROCÉDÉ DE COMMANDE D'UNE MACHINE D'USINAGE DU BOIS

(30) Priorität: 16.05.2019 DE 202019102750 U
(43) Veröffentlichungstag der Anmeldung: 23.03.2022
(73) Patentinhaber: Altendorf GmbH, 32429 Minden (DE)
(72) Erfinder: VEHLING, Andreas, 31693 Hespe (DE); RUCHATZ, Jürgen, 32425 Minden (DE); SCHRÖDER, Karl-Friedrich, 32339 Espelkamp (DE)
(74) Vertreter: Eisenführ Speiser
(86) Internationale Anmeldenummer: PCT/EP2020/063487
(87) Internationale Veröffentlichungsnummer: WO 2020/229610

(56) Entgegenhaltungen:
- EP-A1- 1 205 285
- EP-A1- 1 837 110
- EP-A2- 2 251 126
- EP-B1- 2 002 912
- DE-A1- 1 628 864
- DE-C1- 19 716 971

## Beschreibung

Die Erfindung betrifft einen Quertisch für eine Holzbearbeitungsmaschine, insbesondere für eine Formatkreissäge, gemäß dem Oberbegriff des Anspruchs 1, eine Holzbearbeitungsmaschine mit einem Quertisch und ein

Verfahren zur Steuerung einer Holzbearbeitungsmaschine. Ein derartiger Quertisch ist aus dem Dokument EP 1 837 110 A1 bekannt.

Holzbearbeitungsmaschinen sind grundsätzlich bekannt. Zu den Holzbearbeitungsmaschinen gehören beispielsweise Kreissägen, Formatkreissägen, Hobelmaschinen und Fräsmaschinen, die auch als Kreissäge-Fräsmaschinen ausgeführt sein können.

Holzbearbeitungsmaschinen und insbesondere Formatkreissägen weisen häufig einen Quertisch auf, der seitlich auskragt. Auskragende Quertische sind in der Regel an einem an dem Maschinenhauptkörper linear geführten Schiebeschlitten angeordnet. Ein großes Werkstück kann somit auf dem Schiebeschlitten und auf dem Quertisch angeordnet werden und mittels des Schiebeschlittens relativ zu einem an der Holzbearbeitungsmaschine angeordneten Werkzeug, insbesondere einem Kreissägeblatt, bewegt werden. Ein Quertisch kann jedoch auch direkt am Maschinenhauptkörper linear geführt sein. Das Werkstück kann durch die Relativbewegung zwischen Werkstück und Werkzeug bearbeitet werden, insbesondere durch ein Kreissägeblatt getrennt werden.

Um präzise Schnitte an dem Werkstück durchführen zu können, weisen Formatkreissägen regelmäßig einen Anschlag, insbesondere einen Winkelanschlag, auf. Ein Winkelanschlag wird auch als Winkelgehrungsanschlag bezeichnet. Der Winkelanschlag kragt in der Regel in der gleichen Richtung aus wie der Quertisch. Mit einem Winkelanschlag sind sowohl rechtwinklige Schnitte als auch Gehrungsschnitte an einem Werkstück möglich. Winkelanschläge sind in der Regel relativ auf dem Quertisch bewegbar angeordnet. Dies erfolgt beispielsweise durch ein Umsetzen des Winkelanschlags, insbesondere durch eine Demontage des Winkelanschlags und eine Montage an einer anderen Stelle des Quertisches. Dies ist insbesondere dafür erforderlich, damit ein Werkstück entweder vor oder hinter dem Winkelanschlag platziert werden kann. Ob ein Werkstück vom Bediener bevorzugt vor oder hinter dem Winkelanschlag platziert wird, ist einerseits von der Bearbeitungssituation abhängig, andererseits von der Art des Werkstücks. So werden beispielsweise schwere und steife Werkstücke bevorzugt vordem Winkelanschlag platziert und geschnitten, hierbei schiebt der Bediener das Werkstück gegen den Winkelanschlag, der quasi als Gegenanschlag dient und das Werkstück in der gewünschten Ausrichtung hält. Die horizontale Schnittkraft drückt hierbei das Werkstück vom Winkelanschlag weg. Leichtere Werkstücke oder Leisten werden hingegen bevorzugt hinter dem Winkelanschlag platziert und geschnitten. Hierbei schiebt der Bediener den Winkelanschlag und dieser schiebt das Werkstück vor sich her und dient hierbei zugleich der Ausrichtung des Werkstücks. Die horizontale Schnittkraft drückt hierbei das Werkstück gegen den Winkelanschlag.

Zwar ist die Möglichkeit, den Winkelanschlag zu versetzen, aus diesem Grund vorteilhaft und sorgt, gerade bei der Durchführung von Winkelgehrungsschnitten mit verschwenktem Winkelanschlag, für eine ausreichende Auflagefläche und damit eine den Bediener entlastende sichere Auflage des Werkstücks auf dem Quertisch. Die Demontage und Montage des Winkelanschlags führt in der Praxis aber zu unerwünschtem Zeitverlust und Aufwand.

In der EP 2 002 912 B1 ist ein Auslegertisch für eine Format- bzw. Plattensäge gelehrt, dessen Auflagefläche mit einem Anschlag derart gekoppelt ist, dass sich die Auflagefläche bei Bewegung des Anschlags mit bewegt. Infolge dessen ist die Reduktion der möglichen Auflagefläche für ein Werkstück bei Einstellung eines Winkels weniger stark ausgeprägt. Nachteilig an diesem Auslegertisch ist jedoch, dass die mögliche Auflagefläche für ein Werkstück lediglich vor dem Anschlag verfügbar ist. Die mögliche Fläche zur Auflage eines Werkstücks hinter dem Anschlag ist gering, sodass hier keine Auflage eines Werkstücks zur Bearbeitung mit der Säge möglich ist. Analog zum bekannten Stand der Technik muss auch hier der Anschlag umgesetzt werden, also demontiert und wieder montiert, um die erforderlichen Auflageflächen zu erhalten.

In der EP 2 106 889 B1 ist ein in Längsrichtung verschiebbares Anschlaglineal gelehrt. Das Anschlaglineal ist auf einem Quertisch angeordnet, dessen Auskragrichtung einstellbar ist. Das Anschlaglineal kann an einer vorderen Kante oder an einer hinteren Kante des Quertisches angeordnet werden. Dies erfolgt durch ein Versetzen des Anschlaglineals, indem dieses zunächst demontiert wird und an der anderen Kante wieder montiert wird. Dies führt einerseits zu einem zeitlichen Aufwand für den Bediener der Formatkreissäge und darüber hinaus gegebenenfalls zu Verschleiß an dem Quertisch und an dem Anschlaglineal. Darüber hinaus kann mit dem zwischen zwei Positionen versetzbaren Anschlaglineal nur eine eingeschränkte Genauigkeit erzielt werden.

Aus DE 33 08 749 C2 ist eine Format- und Gehrungskreissäge vorbekannt. Bei dieser Kreissäge ist ein Vorschubtisch vorgesehen, der eine Werkstückauflage umfasst, die durch eine Tischplatte, mehrere Werkstückauflageschienen und eine ausziehbare Werkstückauflage gebildet wird. Auf der Tischplatte ist eine Gehrungsanschlagschiene angeordnet, die in mehreren Stecklöchern von Stecklochreihen platziert werden kann. Nachteilig an dieser Ausgestaltung ist, dass die Tischplatte einen wesentlichen Teil der Werkstückauflagefläche bildet und daher ein Umstecken der Gehrungsanschlagschiene notwendig ist, um dem Benutzer den Zugang zu der Gehrungsanschlagschiene in den unterschiedlichen Betriebsarten der Kreissäge zu ermöglichen.

Aus DE2910095 A ist ein Schiebetisch für Tischkreissägen vorbekannt. Dieser Schiebetisch weist ebenfalls eine Tischplatte auf, deren Auflagefläche durch ausziehbare Führungsstangen und Rundstangen vergrößert werden kann. Auf der Tischplatte ist ein Anschlag angeordnet. Nachteilig ist hier wiederum, dass die im Wesentlichen die Auflagefläche ausbildende Tischplatte den Zugang zum Anschlag für den Benutzer behindert und der Anschlag daher nur von einer Seite aus für den Benutzer zugänglich ist.

Es ist eine Aufgabe der vorliegenden Erfindung, einen Quertisch für eine Holzbearbeitungsmaschine, insbesondere für eine Formatkreissäge, und eine Holzbearbeitungsmaschine mit einem solchen Quertisch bereitzustellen, welche eine höhere Genauigkeit, bessere Bedienbarkeit und/oder einen geringeren Verschleiß ermöglichen.

Diese Aufgabe wird erfindungsgemäß gelöst durch einen Quertisch für eine Holzbearbeitungsmaschine, insbesondere für eine Formatkreissäge, gemäß Anspruch 1, umfassend einen Quertischrahmen, eine horizontal liegende erste Werkstückauflagefläche, eine an dem Quertischrahmen oberhalb der ersten Werkstückauflagefläche befestigte Anschlagschiene mit einer ersten vertikal stehenden Werkstückanschlagfläche auf einer ersten Seite der Anschlagschiene, die so angeordnet ist, dass ein auf der ersten Werkstückauflagefläche in einem horizontal vor der Anschlagschiene angeordneten ersten Auflagebereich aufliegendes plattenförmiges Werkstück mit einer Seitenkante an der ersten Werkstückanschlagfläche angelegt werden kann, einer zweiten vertikal stehenden Werkstückanschlagfläche auf einer zweiten, der ersten Seite gegenüberliegenden Seite der Anschlagschiene, wobei die zweite Werkstückanschlagfläche so angeordnet ist, dass ein auf der ersten Werkstückauflagefläche in einem horizontal hinter der Anschlagschiene angeordnetem zweiten Auflagebereich aufliegendes plattenförmiges Werkstück mit einer Seitenkante an der zweiten Werkstückanschlagfläche angelegt werden kann, wobei die erste Werkstückauflagefläche durch eine Auflagefläche eines Stützbalkens gebildet wird, und der Stützbalken relativ zu dem Quertischrahmen hin- und her bewegbar angeordnet ist, sodass der Abstand des vorderen Stützbalkenendes und des hinteren Stützbalkenendes zur Anschlagschiene variabel ist, also vergrößert und verringert werden kann.

Eine Holzbearbeitungsmaschine erstreckt sich vorzugsweise von einem vorderen Ende bis zu einem hinteren Ende, wobei eine Vorschub- oder Arbeitsrichtung vom vorderen Ende zum hinteren Ende ausgerichtet ist. Ein an der Holzbearbeitungsmaschine angeordneter Quertisch wird üblicherweise relativ zu der Holzbearbeitungsmaschine in Vorschubrichtung verfahren, um einen Bearbeitungsvorgang wie einen Sägeschnitt an einem auf dem Quertisch befindlichen Werkstück durchzuführen. Die erste Werkstückanschlagfläche der Anschlagschiene ist im bestimmungsgemäßen Gebrauch des Quertisches dem vorderen Ende der Holzbearbeitungsmaschine zugewandt. Der horizontal vor der Anschlagschiene angeordnete erste Auflagebereich ist somit in Vorschubrichtung zwischen der Anschlagschiene und dem vorderen Ende der Holzbearbeitungsmaschine angeordnet. Ein im ersten Auflagebereich angeordnetes und zu sägendes Werkstück wird somit von einem Bediener in Vorschubrichtung gegen die erste Werkstückanschlagfläche der Anschlagschiene gedrückt, wohingegen die horizontale Komponente der Schnittkraft das Werkstück von der Anschlagschiene wegdrückt. Die zweite Werkstückanschlagfläche der Anschlagschiene ist im bestimmungsgemäßen Gebrauch des Quertisches dem hinteren Ende der Holzbearbeitungsmaschine zugewandt. Der horizontal hinter der Anschlagschiene angeordnete zweite Auflagebereich ist folglich in Vorschubrichtung zwischen der Anschlagschiene und dem hinteren Ende der Holzbearbeitungsmaschine angeordnet. Ein im zweiten Auflagebereich und an der zweiten Werkstückanschlagfläche angeordnetes und zu sägendes Werkstück wird somit von einem Bediener mit der Anschlagschiene in Vorschubrichtung gedrückt, wohingegen die horizontale Komponente der Schnittkraft das Werkstück gegen die Anschlagschiene drückt.

Die erste Werkstückauflagefläche wird durch die Auflagefläche des beweglichen Stützbalkens gebildet. Unter der Auflagefläche des Stützbalkens ist insbesondere jeder Teil des Stützbalkens zu verstehen, der im bestimmungsgemäßen Betrieb des Quertisches zur Auflage eines Werkstücks geeignet ist. Die Auflagefläche kann auch im Wesentlichen linienförmig ausgebildet sein, beispielsweise indem eine Kante eines Stützbalkenprofils vertikal nach oben gerichtet ist. Vorzugsweise ist der Stützbalken ein Rechteckhohlprofil. Insbesondere ist es bevorzugt, dass der Stützbalken an einer vertikal nach unten gerichteten Seite des Stützbalkens offen ist. Der Stützbalken kann beispielsweise eine balkenförmige und/oder plattenförmige und/oder rohrförmige Geometrie aufweisen und/oder aus Rollen bestehen oder diese aufweisen. Der erste Auflagebereich und der zweite Auflagebereich der ersten Werkstückauflagefläche umfassen jeweils vorzugsweise zumindest zwei voneinander jeweils um mindestens 20cm, vorzugsweise 30cm, beabstandete Auflagepunkte, um eine sichere Auflage eines Werkstücks zu ermöglichen. Diese 20cm, vorzugsweise 30cm, voneinander beabstandeten Auflagepunkte können insbesondere durch das Verschieben des Stützbalkens gebildet werden. Insbesondere können zwei Stützbalken vorgesehen sein. In diesem Fall umfasst der erste und der zweite Auflagebereich der ersten Werkstückauflagefläche jeweils vorzugsweise zumindest drei voneinander jeweils um mindestens 20cm, vorzugsweise 30cm, beabstandete Auflagepunkte, wobei die drei Auflagepunkte nicht auf einer Linie liegen sondern der Abstand des ersten vom zweiten Auflagerpunkt in einer senkrechten Richtung zu der Richtung des Abstands des zweiten zum dritten Auflagepunkt definiert ist.

Der Stützbalken ist in vorzugsweise zumindest einem Betriebszustand vorzugsweise unabhängig von der Anschlagschiene beweglich. Insbesondere besteht keine mechanische oder steuerungstechnische Kopplung zwischen der Bewegung des Stützbalkens und einer Verschwenkung der Anschlagschiene. Eine Bewegung der Anschlagschiene bewirkt in einem Betriebszustand vorzugsweise keine Bewegung oder nicht unmittelbar eine Bewegung des Stützbalkens. Insbesondere bewirkt eine Bewegung der Anschlagschiene in diesem Betriebszustand keine Verschiebung des Stützbalkens in eine Verschieberichtung des Stützbalkens. Außerdem bewirkt in einem Betriebszustand eine Bewegung des Stützbalkens keine Bewegung oder keine unmittelbare Bewegung der Anschlagschiene.

Der Stützbalken erstreckt sich vorzugsweise in Stützbalkenlängsrichtung von einem vorderen Stützbalkenende hin zu einem hinteren Stützbalkenende. Das vordere Stützbalkenende ist vorzugsweise von der zweiten Werkstückanschlagfläche abgewandt. Das hintere Stützbalkenende ist vorzugsweise von der ersten Werkstückanschlagfläche abgewandt.

Der Stützbalken ist relativ zu dem Quertischrahmen und damit auch relativ zu der am Quertischrahmen befestigten Anschlagschiene hin- und her bewegbar angeordnet. Das bedeutet insbesondere, dass der Stützbalken relativ zu der Anschlagschiene verschiebbar angeordnet ist, um somit den ersten Auflagebereich im Verhältnis zum zweiten Auflagebereich zu vergrößern oder zu verkleinern. Der Begriff verschiebbar wird insbesondere als die Möglichkeit einer Bewegung in einer im Wesentlichen linearen Richtung verstanden. Der Stützbalken ist vorzugsweise im Wesentlichen stufenlos relativ zu der Anschlagschiene verschiebbar. Im Wesentlichen stufenlos bedeutet insbesondere, dass mehr als 3, mehr als 5, mehr als 10, oder mehr als 20 verschiedene Positionen des Stützbalkens relativ zu dem Anschlaglineal einstellbar sind.

Die Anschlagschiene kann verschwenkbar und gfs. entlang ihrer Erstreckungsrichtung längsverschieblich an dem Quertischrahmen befestigt sein, um Gehrungsschnitte auszuführen und eine Maßkorrektur an den Anschlagklappen bei solchen Gehrungsschnitten zu realisieren. Demzufolge kann die Befestigung der Anschlagschiene durch ein Schwenklager mit einer senkrechten Schwenkachse auf dem Quertischrahmen erfolgen. Erfindungsgemäß ist es aber nicht notwendig, zwei oder mehr unterschiedliche Positionen für dieses Schwenklager an dem Quertischrahmen vorzusehen, um die Anschlagschiene zwischen zwei unterschiedlichen Positionen zu versetzen und hierdurch das Arbeiten vor oder hinter der Anschlagschiene zu ermöglichen, denn dies wird durch das Bewegen der Stützbalken realisisiert.

Es ist bevorzugt, dass die Anschlagschiene relativ zu einem Maschinengestell und/oder relativ zu einem Schiebeschlitten während der Relativbewegung des Stützbalkens ortsfest ist. Der relativ zu der Anschlagschiene hin- und her bewegbar angeordnete Stützbalken ermöglicht, dass der Abstand des vorderen Stützbalkenendes und des hinteren Stützbalkenendes zur Anschlagschiene variabel ist, also vergrößert und verringert werden kann. Insbesondere wird dies erfindungsgemäß erreicht, ohne dass die Anschlagschiene versetzt werden muss. Beispielsweise kann die Anschlagschiene unversetzbar an dem Quertisch angeordnet sein. Der Stützbalken ist insbesondere derart angeordnet, dass dieser horizontal kippstabil angeordnet ist.

Der Quertisch erstreckt sich vorzugsweise von einem vorderen Quertischende zu einem hinteren Quertischende. Die erste Werkstückanschlagfläche ist vorzugsweise dem vorderen Quertischende zugewandt. Die zweite Werkstückanschlagfläche ist vorzugsweise dem hinteren Quertischende zugewandt. Es ist bevorzugt, dass ein vorderer Abstand zwischen der ersten Werkstückanschlagfläche und dem vorderen Quertischende im Wesentlichen einem hinteren Abstand zwischen der zweiten Werkstückanschlagfläche und dem hinteren Quertischende entspricht. Im Wesentlichen bedeutet hier insbesondere, dass das Verhältnis aus dem vorderen Abstand und dem hinteren Abstand zwischen 0,5 und 1,5, vorzugsweise zwischen 0,75 und 1,25, besonders bevorzugt zwischen 0,9 und 1,1 liegt. Die Anschlagschiene ist folglich bevorzugt mittig auf dem Quertisch angeordnet und erstreckt sich vom außenliegenden Ende des Quertischs zum innenliegenden, dem Bearbeitungswerkzeug zugewandten Ende des Quertisches.

Erfindungsgemäß ist ein Umsetzen der Anschlagschiene von der hinteren Kante des Quertisches zu der vorderen Kante des Quertisches und umgekehrt nicht erforderlich, um zwischen einer Anlage des Werkstücks vor der Anschlagschiene und hinter der Anschlagschiene zu wechseln. Stattdessen kann die erste Werkstückauflagefläche des Quertisches, je nachdem, ob ein Werkstück vor oder hinter der Anschlagschiene zu platzieren ist, vor oder hinter der Anschlagschiene vergrößert werden. Diese Anpassung der ersten Werkstückauflagefläche an die Anforderungen eines Bedieners kann einfach durch ein Bewegen des Stützbalkens relativ zu der Anschlagschiene erfolgen. Das Bewegen des Stützbalkens kann in einem Bruchteil der Zeit erfolgen, die für ein Umsetzen einer Anschlagschiene erforderlich ist. Der hierdurch gewonnene Zeitvorteil kann produktiv genutzt werden, sodass die Anzahl der zu bearbeitenden Werkstücke pro Zeiteinheit erhöht werden kann. Der erfindungsgemäße Quertisch zeichnet sich außerdem durch ein geringeres Gewicht aus. Die Vermeidung der Umsetzbarkeit resultiert in einer geringeren Anzahl an Losteilen.

In einer bevorzugten Ausführungsvariante ist vorgesehen, dass der Stützbalken zwischen einer ersten Position, in der die Auflagefläche des Stützbalkens im Wesentlichen horizontal vor der Anschlagschiene angeordnet ist und den ersten Auflagebereich bildet oderergänzt, und einer zweiten Position, in der die Auflagefläche des Stützbalkens im Wesentlichen horizontal hinter der Anschlagschiene angeordnet ist und den zweiten Auflagebereich bildet oder ergänzt, hin- und her bewegbar ist.

Der Stützbalken ist zwischen der ersten Position und der zweiten Position hin- und her bewegbar. Durch die Hin- und Herbewegbarkeit des Stützbalkens zwischen der ersten Position und der zweiten Position kann die Größe der ersten Werkstückauflagefläche vor und hinter der Anschlagschiene verändert werden. In der ersten Position ist die von der Auflagefläche des Stützbalkens gebildete erste Werkstückauflagefläche im Wesentlichen vor der Anschlagschiene angeordnet, sodass ein Werkstück in dem ersten Auflagebereich abgelegt und an der ersten Werkstückanschlagfläche angelegt werden kann. Im Betrieb des Quertisches an einer Holzbearbeitungsmaschine drückt in dieser Position ein Bediener das Werkstück gegen die Anschlagschiene, wohingegen die horizontale Schnittkraft des Kreissägeblattes das Werkstück von der Anschlagschiene wegdrückt. In der zweiten Position ist die von der Auflagefläche des Stützbalkens gebildete erste Werkstückauflagefläche im Wesentlichen hinter der Anschlagschiene angeordnet, sodass ein Werkstück in dem zweiten Auflagebereich abgelegt und an der zweiten Werkstückanschlagfläche angelegt werden kann. Im Betrieb des Quertisches an einer Holzbearbeitungsmaschine drückt in dieser Position ein Bediener das Werkstück mittels der Anschlagschiene in Vorschubrichtung und die horizontale Komponente der Schnittkraft des Kreissägeblattes drückt das Werkstück gegen die Anschlagschiene.

Im Wesentlichen horizontal vor oder hinter der Anschlagschiene bedeutet insbesondere, dass in der ersten Position mehr als 50 %, mehr als 60 %, mehr als 70 %, mehr als 80 % oder mehr als 90 % der gesamten Auflagefläche des Stützbalkens vor bzw. hinter der Anschlagschiene angeordnet ist. Ferner kann im Wesentlichen horizontal vor oder hinter der Anschlagschiene bedeuten, dass in der ersten Position mehr als 50 %, mehr als 60 %, mehr als 70 %, mehr als 80 % oder mehr als 90 % der Stützbalkenlängserstreckung vor bzw. hinter der Anschlagschiene angeordnet ist. In der ersten Position ist insbesondere die erste Werkstückanschlagfläche dem größeren Teil der ersten Werkstückauflagefläche zugewandt.

Der Stützbalken kann beispielsweise verschwenkbar oder linear parallel zu der Stützbalkenlängserstreckung verschiebbar sein. Darüber hinaus kann der Stützbalken auch in einer Richtung quer zu der Stützbalkenlängserstreckung verschiebbar angeordnet sein. Beispielsweise kann es bevorzugt sein, dass der Stützbalken in einer Richtung parallel zu der Haupterstreckungsrichtung der Anschlagschiene verschiebbar angeordnet ist, um die erste Werkstückauflagefläche an eine Werkstückgröße anzupassen.

Darüber hinaus kann der Stützbalken auch in eine Zwischenposition zwischen der ersten Position und der zweiten Position bewegt werden, wenn dies von einem Bediener als vorteilhaft empfunden wird. Hierdurch wird der zusätzliche Vorteil erreicht, dass die verfügbare Auflagefläche für ein Werkstück bei Einstellung eines Winkels sich nicht reduziert. Sowohl bei der Schnittführung vor als auch der Schnittführung hinter dem Winkelanschlag wird somit eine stabile und sichere Auflage des Werkstücks auf dem Quertisch erzielt.

Eine weitere bevorzugte Ausführungsvariante weist ein Führungselement auf, das ausgebildet ist, um den Stützbalken in horizontaler Richtung zu führen, wobei vorzugsweise das Führungselement an der Anschlagschiene angeordnet ist. Das Führungselement kann beispielsweise als ein Auflager wirken, sodass das Führungselement zumindest eine vertikale Kraft aufnehmen kann. Darüber hinaus kann es bevorzugt sein, dass das Führungselement auch Kräfte in horizontaler Richtung aufnehmen kann, beispielsweise um eine Linearführung für den Stützbalken auszubilden. Das Führungselement nimmt vorzugsweise auch Drehmomente auf, die insbesondere durch die einseitige Belastung des Stützbalkens in der ersten Position und in der zweiten Position entstehen können. Durch ein drehmomentaufnehmendes Führungselement kann der Stützbalken kippstabil angeordnet sein.

In einer weiteren bevorzugten Ausführungsvariante ist vorgesehen, dass der Quertisch ein erstes Kopplungselement zur Kopplung des Quertischs mit einer Holzbearbeitungsmaschine, insbesondere einem Schiebeschlitten einer Holzbearbeitungsmaschine umfasst, wobei das erste Kopplungselement vorzugsweise an der Holzbearbeitungsmaschine oder an einer Schiebeschlittenschiene des Schiebeschlittens horizontal führbar ist und ferner vorzugsweise mindestens ein Klemmelement zur Fixierung des ersten Kopplungselements an der Schiebeschlittenschiene umfasst. Das erste Kopplungselement ermöglicht eine Relativbewegung des Quertisches an dem Schiebeschlitten. Infolgedessen können große Werkstücke in vorteilhafterweise mit einer Holzbearbeitungsmaschine mit dem Quertisch bearbeitet werden.

In einer weiteren bevorzugten Ausführungsvariante ist vorgesehen, dass der Quertisch als Parallelogrammquertisch ausgebildet ist. Insbesondere ist es bevorzugt, dass der Quertisch und insbesondere der als Parallelogrammquertisch ausgebildete Quertisch ein erstes Querrahmenelement und ein zweites Querrahmenelement aufweist, welche parallel zueinander angeordnet sind, horizontal voneinander beabstandet angeordnet sind, und parallel zueinander verschiebbar miteinander gekoppelt sind, indem das erste und zweite Querrahmenelement über ein Längsrahmenelement gelenkig miteinander verbunden sind.

Das erste Querrahmenelement und das zweite Querrahmenelement erstrecken sich vorzugsweise jeweils von einem ersten Ende zu einem zweiten Ende. Die ersten Enden können mit einer Rahmenbreite beabstandet sein. Vorzugsweise sind die zweiten Enden ebenfalls mit der Rahmenbreite beabstandet. Die Querrahmenelemente können beispielsweise mit ihren ersten Enden drehbar an einem Schiebeschlitten anordenbar sein. Ferner vorzugsweise sind die Querrahmenelemente mit ihren ersten Enden an dem ersten Kopplungselement angeordnet, insbesondere drehbar angeordnet. Außerdem können die zweiten Enden der Querrahmenelemente an einem zweiten Kopplungselement angeordnet sein, vorzugsweise schwenkbar angeordnet. Die schwenkbare Anordnung der ersten Enden und der zweiten Enden ist vorzugsweise derart, dass jeweils eine vertikale Drehachse ausgebildet wird. Die schwenkbare Anordnung der ersten Enden und der zweiten Enden der Querrahmenelemente führt zur Ausbildung eines Parallelogrammquertischs, der um eine vertikale Tischschwenkachse verschwenkbar ist. Die im Vorherigen erläuterte Anordnung der ersten Enden und der zweiten Enden an dem Schiebeschlitten, dem ersten Kopplungselement und/oder dem zweiten Kopplungselement ist insbesondere derart zu verstehen, dass die Querrahmenelemente mit Bereichen angrenzend an die ersten Enden und an die zweiten Enden an dem Schiebeschlitten, dem ersten Kopplungselement und/oder dem zweiten Kopplungselement angeordnet sind.

Die Anschlagschiene erstreckt sich vorzugsweise im Wesentlichen parallel zu dem ersten Querrahmenelement und zu dem zweiten Querrahmenelement. Die Anschlagschiene weist vorzugsweise von dem ersten Querrahmenelement und dem zweiten Querrahmenelement einen im Wesentlichen gleich großen Abstand auf. Es ist bevorzugt, dass der Abstand des ersten Querrahmenelements zu der ersten Werkstückanschlagfläche und der Abstand des zweiten Querrahmenelements zu der zweiten Werkstückanschlagfläche im Wesentlichen gleich ist. Im Wesentlichen bedeutet hier insbesondere, dass das Verhältnis dieser Abstände zwischen 0,5 und 1,5, vorzugsweise zwischen 0,75 und 1,25, besonderes bevorzugt zwischen 0,9 und 1,1 liegt. Die Anschlagschiene liegt folglich im Wesentlichen mittig zwischen den beiden Querrahmenelementen.

Vorzugsweise sind das erste Querrahmenelement und das Längsrahmenelement durch eine Winkelverstelleinheit miteinander verbunden, wobei die Winkelverstelleinheit eingerichtet ist, um eine Verschwenkung des ersten Querrahmenelements zu dem Längsrahmenelement und eine Parallelverschiebung des ersten Querrahmenelements relativ zu dem zweiten Querrahmenelement zu bewirken, und der zumindest eine Stützbalken durch das erste und zweite Querrahmenelement vertikal abgestützt wird.

Die Winkelverstelleinheit kann beispielsweise an einem ersten Angriffspunkt des ersten Querrahmenelements und an einem zweiten Angriffspunkt des zweiten Querrahmenelements befestigt sein, wobei die Winkelverstelleinheit aus- und einfahrbar ausgebildet ist. Dadurch kann die Winkelverstelleinheit die Beabstandung zwischen dem ersten Angriffspunkt und dem zweiten Angriffspunkt vergrößern und verringern. Durch die parallele Verschiebbarkeit der Querrahmenelemente kann durch die Vergrößerung oder Verkleinerung der Beabstandung zwischen dem ersten Angriffspunkt und dem zweiten Angriffspunkt eine Parallelverschiebung bewirkt werden. Infolgedessen kann bei drehbarer Anordnung der Querrahmenelemente an einem Schiebeschlitten eine Verschwenkung der Querrahmenelemente und somit des Quertischs um eine vertikale Tischschwenkachse relativ zu dem Schiebeschlitten bewirkt werden. Die Winkelverstelleinheit kann ferner einen Antrieb zur motorischen Verstellung des Winkels zwischen Quertisch, insbesondere Anschlagschiene, und der Verfahrrichtung des Schiebeschlittens und/oder einer Sägelinie aufweisen. Besonders bevorzugt ist die motorische Verstellung elektromotorisch ausgebildet. Ergänzend oder alternativ kann die Winkelverstelleinheit manuell bedient werden.

Insbesondere ist es bevorzugt, dass die Winkelverstelleinheit eine Winkelfeineinstellung umfasst. Mit der Winkelfeineinstellung kann ein Bediener einen präzisen Gehrungswinkel einstellen. Die Winkelfeineinstellung ist insbesondere mit der Winkelverstelleinheit gekoppelt, sodass mit der Winkelfeineinstellung eine definierte Parallelverschiebung der Querrahmenelemente erfolgen kann. Hierfür kann die Winkelfeineinstellung beispielsweise einen Drehknopf aufweisen. Mit der Winkelfeineinstellung kann vorzugsweise eine Winkelgenauigkeit relativ zu einer Verfahrrichtung des Schiebeschlittens von kleiner als 1/25, kleiner als 1/50 Bogengrad, insbesondere kleiner als 1/100 Bogengrad, eingestellt werden.

Der Quertisch umfasst ferner vorzugsweise eine Winkelsensorik zur Detektion eines eingestellten Winkels zwischen dem Quertisch, insbesondere der Anschlagschiene, und einer Verfahrrichtung eines Schiebeschlittens und/oder einer Sägelinie. Die Winkelsensorik kann diesen Winkel beispielsweise inkrementell erfassen. Hierfür weist die Winkelfeineinstellung beispielsweise einen Inkrementalgeber auf. Außerdem kann die Winkelsensorik auch so ausgebildet sein, dass diese den Winkel absolut erfasst.

Ferner kann die Winkelverstelleinheit einen Indexbolzen zur Fixierung des Quertischs und/oder der Anschlagschiene umfassen, wobei der Indexbolzen derart mit der Anschlagschiene zusammenwirkt, dass die erste Werkstückanschlagfläche und die zweite Werkstückanschlagfläche definierte Winkelstellungen, beispielsweise einen 90° Winkel mit einer von einem Kreissägeblatt einer Holzbearbeitungsmaschine gebildeten Sägelinie einschließen kann. Der Indexbolzen weist vorzugsweise eine Bolzenlängsachse auf, wobei die Bolzenlängsachse vorzugsweise horizontal ausgerichtet ist.

Der Stützbalken kann vorzugsweise an dem ersten Querrahmenelement und/oder an dem zweiten Querrahmenelement angeordnet, vorzugsweise geführt, sein. Vorzugsweise ist die Anschlagschiene in vertikaler Richtung und/oder in horizontaler Richtung von den Querrahmenelementen beabstandet, wobei die Anschlagschiene insbesondere in vertikaler Richtung über den Querrahmenelementen angeordnet sein kann. Vorzugsweise entspricht diese vertikale Beabstandung im Wesentlichen der Höhe des Stützbalkens. Der Stützbalken kann auf dem ersten Querrahmenelement und/oder auf dem zweiten Querrahmenelement aufliegen und unter der Anschlagschiene hindurch verlaufen. Die Anschlagschiene ist in horizontaler Richtung vorzugsweise zwischen den Querrahmenelementen angeordnet. Ferner ist es bevorzugt, dass das Führungselement an dem ersten Querrahmenelement und/oder an dem zweiten Querrahmenelement angeordnet ist.

Gemäß einer weiteren bevorzugten Fortbildung des Quertisches ist vorgesehen, dass der Quertisch zwei oder mehr Stützbalken umfasst, wobei die zwei oder mehr Stützbalken horizontal voneinander beabstandet sind. Die zwei oder mehr Stützbalken können gleich oder verschieden ausgebildet sein. Beispielsweise können sich diese hinsichtlich ihrer Stützbalkenlängserstreckung unterscheiden. Es ist bevorzugt, dass ein erster Stützbalken in einem Bereich angeordnet ist, der im bestimmungsgemäßen Betrieb einem Schiebeschlitten zugewandt ist, und ein zweiter Stützbalken in einem Bereich angeordnet ist, der im bestimmungsgemäßen Betrieb dem Schiebeschlitten abgewandt ist.

Ferner ist es bevorzugt, dass wenigstens ein Stützbalken in mehr als einer horizontalen Richtung bewegbar ist. Dies hat den Vorteil, dass der Stützbalken an individuelle Auflagesituationen für Werkstücke angepasst werden kann. Insbesondere auch kleinere Werkstücke können somit auf der Auflagefläche des Stützbalkens angeordnet werden.

Eine weitere bevorzugte Ausführungsvariante des Quertisches sieht vor, dass dieser ein Kröpfelement aufweist, wobei das Kröpfelement mit einem ersten Kröpfende an einem Bereich angrenzend an ein Quertischende angeordnet ist und ein zweites Kröpfende von dem Quertischende beabstandet ist. Das erste Kröpfende ist vorzugsweise an dem Quertischende angeordnet, das im bestimmungsgemäßen Betrieb einem Schiebeschlitten abgewandt ist. Das zweite Kröpfende ist insbesondere derart angeordnet und ausgebildet, dass dieses mit einem Teleskoparm einer Holzbearbeitungsmaschine zur Stützung des Quertisches koppelbar ist. Durch ein derart ausgebildetes Kröpfelement wird die maximal mögliche Schnittlänge erhöht.

Darüber hinaus kann der Quertisch eine entlang der Anschlagschiene verfahrbar gelagerte Anschlagklappe umfassen, die eine vertikal stehende und senkrecht zur ersten und/oder zweiten Werkstückanschlagfläche ausgerichtete Anschlagklappenfläche aufweist. Darüber hinaus kann vorgesehen werden, dass die Anschlagklappe zwischen zwei Klappenpositionen verstellbar ist und in einer ersten Klappenposition oberhalb des ersten Auflagebereichs angeordnet ist und in einer zweiten Klappenposition oberhalb des zweiten Auflagebereichs angeordnet ist, wobei vorzugsweise die Anschlagklappe um eine im Wesentlichen horizontale Achse zwischen den beiden Klappenpositionen klappbar angeordnet ist.

Die Anschlagklappe kann einerseits genutzt werden, wenn ein Werkstück an der ersten Werkstückanschlagfläche anliegt, und andererseits auch, wenn ein Werkstück an der zweiten Werkstückanschlagfläche der Anschlagschiene angeordnet ist. Es ist darüber hinaus bevorzugt, dass die Anschlagschiene einen Anschlagklappenschwenkaktuator umfasst, wobei der Anschlagklappenschwenkaktuator angeordnet und ausgebildet ist, um die Anschlagklappe zwischen der ersten Klappenposition und der zweiten Klappenposition zu bewegen.

Außerdem kann der Anschlagklappenschwenkaktuator angeordnet und ausgebildet sein, um die Anschlagklappe in eine Verfahrposition zu bewegen, wobei die Verfahrposition zwischen der ersten Klappenposition und der zweiten Klappenposition angeordnet ist, und vorzugsweise die Anschlagklappe in der Verfahrposition vertikal, insbesondere nach oben, ausgerichtet ist. Dies bedeutet insbesondere, dass die Anschlagklappe weder an der ersten noch an der zweiten Werkstückanschlagfläche anliegt. Vorzugsweise ist der Anschlagklappenschwenkaktuator eingerichtet, die Anschlagklappe vor jeder Bewegung entlang der Anschlagschiene in die Verfahrposition zu verfahren. Dies ermöglicht die Einstellung einer höheren Bewegungsgeschwindigkeit entlang der Anschlagschiene, da die im Folgenden erläuterten Quetschgefahren reduziert sind.

Angetriebene Anschlagklappen bergen die Gefahr von Quetschverletzungen für einen Bediener. Eine derartige Quetschgefahr kann reduziert oder vermieden werden, indem die Anschlagklappe beim Verfahren in die Verfahrposition bewegt wird. Da die Verfahrposition zwischen der ersten Klappenposition und der zweiten Klappenposition ist, ist in der Regel ein ausreichender Abstand zwischen der Anschlagklappe und weiteren Komponenten des Quertisches vorhanden. Durch diese Beabstandung reduziert sich das Risiko von Quetschverletzungen für einen Bediener.

Gemäß einem weiteren Aspekt wird die eingangs genannte Aufgabe gelöst durch eine Holzbearbeitungsmaschine, insbesondere Formatkreissäge, gemäß Anspruch 10, umfassend einen Quertisch nach einer der im Vorherigen beschriebenen Ausführungsvarianten, der entlang einer Arbeitsrichtung beweglich relativ zu einem Werkzeug an einem Maschinengestell gelagert ist.

Die Holzbearbeitungsmaschine weist vorzugsweise einen Werkstückauflagetisch oberhalb des Maschinengestells auf. Darüber hinaus kann die Holzbearbeitungsmaschine ein Werkzeug wie ein Kreissägeblatt aufweisen, das mit einem Umfangsabschnitt aus einem im Werkstückauflagetisch angeordneten Sägeschlitz herausragt. Das Kreissägeblatt bildet durch seine horizontale, diametrale Blatterstreckung auf Höhe des Werkstückauflagetisches eine horizontale Sägelinie aus, die in Arbeitsrichtung verläuft. Vorzugsweise ist vorgesehen, dass die Holzbearbeitungsmaschine einen relativ zu dem Maschinengestell linear verfahrbaren Schiebeschlitten aufweist, wobei der Quertisch an dem Schiebeschlitten angeordnet ist. Der Schiebeschlitten ist vorzugsweise in Vorschubrichtung und in entgegengesetzter Richtung parallel zu der Sägelinie relativ zu dem Gestell verfahrbar.

Der Quertisch ist vorzugsweise derart an dem Schiebeschlitten angeordnet, dass dieser im 90°-Winkel zur Sägelinie auskragt. Vorzugsweise ist die Anschlagschiene mit ihrer Schienen-Längserstreckung in einem 90°-Winkel zur Sägelinie angeordnet. Mit einer derartigen Holzbearbeitungsmaschine können Sägeschnitte durchgeführt werden, die im 90°-Winkel zu der an der Anschlagschiene angeordneten Werkstückseite ausgerichtet sind.

In einer weiteren bevorzugten Ausführungsvariante der Holzbearbeitungsmaschine ist vorgesehen, dass der Quertisch um eine im Wesentlichen vertikale Tischschwenkachse schwenkbar an dem Schiebeschlitten angeordnet ist. Mit einer derartig ausgebildeten Holzbearbeitungsmaschine ist die Herstellung von Gehrungsschnitten an Werkstücken möglich. Dies wird dadurch ermöglicht, dass die an dem Quertisch angeordnete Anschlagschiene und insbesondere die erste und die zweite Werkstückanschlagfläche einen von 90° verschiedenen Winkel zur Sägelinie einnehmen können. Durch die schwenkbare Anordnung des Quertisches an dem Schiebeschlitten kann die Auskragrichtung des Quertisches verändert werden.

In einer weiteren bevorzugten Ausführungsvariante ist vorgesehen, dass der Quertisch als Parallelogrammquertisch ausgebildet ist und um die im Wesentlichen vertikale Tischschwenkachse schwenkbar an dem Schiebeschlitten angeordnet ist, wobei vorzugsweise der Quertisch mittels zwei Drehgelenken an dem Schiebeschlitten befestigt ist.

In einer weiteren bevorzugten Ausführungsvariante ist vorgesehen, dass der Quertisch mittels eines ersten Kopplungselements an dem Schiebeschlitten angeordnet ist, und das erste Kopplungselement parallel zur Arbeitsrichtung bzw. Sägelinie bewegbar an dem Schiebeschlitten angeordnet ist, wobei vorzugsweise das erste Kopplungselement an einer Schiebeschlittenschiene geführt ist und ferner vorzugsweise mindestens ein Klemmelement an dem ersten Kopplungselement angeordnet ist, das ausgebildet ist, um das erste Kopplungselement an der Schiebeschlittenschiene zu fixieren. Die Schiebeschlittenschiene und das erste Kopplungselement sind ferner vorzugsweise derart ausgebildet, dass im gelösten Zustand des Klemmelements im Wesentlichen lediglich eine Bewegung parallel zur Sägelinie möglich ist. Der Quertisch bleibt insbesondere in seiner vertikalen Ausrichtung im Wesentlichen auch im gelösten Zustand des Klemmelements gleich.

In einer weiteren bevorzugten Ausführungsvariante ist vorgesehen, dass der Schiebeschlitten eine zweite, fluchtend zu der ersten angeordneten Werkstückauflagefläche zur Auflage eines Werkstücks aufweist und die Anschlagschiene um eine vertikale Anschlagschienenachse schwenkbar angeordnet ist.

Darüber hinaus ist es bevorzugt, dass die Holzbearbeitungsmaschine fortgebildet ist durch eine Erkennungsvorrichtung, umfassend einen Klappensensor, um die erste Klappenposition und die zweite Klappenposition und vorzugsweise die Verfahrposition der Anschlagklappe zu erkennen, und/oder einen Werkstücksensor, um ein Werkstück an der ersten Werkstückanschlagfläche und/oder der zweiten Werkstückanschlagfläche zu erkennen. Der Klappensensor kann beispielsweise als Positionssensor an der Anschlagklappe ausgebildet sein. Darüber hinaus kann der Klappensensor als Kamera ausgebildet sein, wobei vorzugsweise mittels einer Bildauswerteeinheit die erste Klappenposition und die zweite Klappenposition erkannt wird.

Mittels der Erkennung, ob ein Werkstück an der ersten Werkstückanschlagfläche oder an der zweiten Werkstückanschlagfläche angeordnet ist, besteht die Möglichkeit eines automatischen Längenausgleichs. Der Werkstücksensor kann beispielsweise als Lichtschranke oder als kapazitiver Sensor ausgebildet sein. Ferner ist es bevorzugt, dass die Anschlagschiene einen federnd gelagerten Abschnitt und eine Positionsabfrageeinrichtung aufweist. Insbesondere ist es bevorzugt, dass der federnd gelagerte Abschnitt an der ersten Werkstückanlagefläche oder an der zweiten Werkstückanlagefläche angeordnet ist. Die erste Werkstückanlagefläche und die zweite Werkstückanlagefläche können auch jeweils einen federnd gelagerten Abschnitt aufweisen. Der federnd gelagerte Abschnitt ist vorzugsweise mit der Positionsabfrageeinrichtung gekoppelt. Bei Anlage eines Werkstücks an dem federnd gelagerten Abschnitt kann mittels der Positionsabfrageeinrichtung die Anlage des Werkstücks erkannt werden und signaltechnisch verarbeitet werden.

In einer weiteren bevorzugten Fortbildung der Holzbearbeitungsmaschine ist vorgesehen, dass diese eine erste Steuerungseinheit zur Steuerung des Anschlagklappenschwenkaktuators umfasst, wobei die erste Steuerungseinheit eingerichtet ist, ein Werkstückpositionssignal von der Erkennungsvorrichtung zu empfangen, wobei das Werkstückpositionssignal eine Positionierung eines Werkstücks an der ersten Werkstückanschlagfläche oder an der zweiten Werkstückanschlagfläche charakterisiert, und wobei die erste Steuerungseinheit ferner eingerichtet ist, ein erstes Klappensteuersignal zu erzeugen, wenn das Werkstückpositionssignal eine Werkstückposition an der ersten Werkstückanschlagfläche charakterisiert, und ein zweites Klappensteuersignal zu erzeugen, wenn das Werkstückpositionssignal eine Werkstückposition an der zweiten Werkstückanschlagfläche charakterisiert, wobei der Anschlagklappenschwenkaktuator eingerichtet ist, die Anschlagklappe in der ersten Klappenposition zu positionieren, wenn das erste Klappensteuersignal empfangen wird, und in der zweiten Klappenposition zu positionieren, wenn das zweite Klappensteuersignal empfangen wird.

Durch ein Schwenken der Anschlagschiene um die Tischschwenkachse verändert sich der Abstand eines beliebigen Punktes auf der ersten oder zweiten Werkstückanschlagfläche von der durch ein Kreissägeblatt gebildeten Sägelinie, auch Seelenachse genannt. Die vom Lineal der Anschlagschiene bereitgestellte Längenangabe bedarf daher einer Längenkorrektur. Beim Schwenken muss daher in der Regel die Längenkorrektur mit verrechnet werden, um die geforderten Maße von der Sägelinie zum Anschlaglineal und/oder zu den Anschlagklappen einzuhalten, um maßhaltige Werkstücke zu fertigen. Die Referenz kann beispielsweise die Tischhöhe und ein Punkt seitlich des Sägeblattflansches sein. Ebenso kann die Werkstückstärke mit verrechnet werden, da hier das Maß oben und unten angenommen werden kann.

Die Längenkorrektur kann beispielsweise durch ein manuelles Verschieben der Anschlagschiene in Schienenlängsrichtung erfolgen, da hierdurch auch das in der Regel auf der Anschlagschiene angeordnete Lineal längsverschoben wird. Für jeden einstellbaren Winkel wird vorzugsweise ein Wert für die erforderliche Längenkorrektur bereitgestellt. Beispielsweise kann die Holzbearbeitungsmaschine eine zweite Steuerungseinheit aufweisen, die die erforderliche Längenkorrektur unter Berücksichtigung eines eingestellten Winkels der Anschlagschiene relativ zu der Sägelinie berechnet. Dieser Winkel kann beispielsweise von der Winkelsensorik bereitgestellt werden. Vorzugsweise umfasst die Holzbearbeitungsmaschine eine Längenkorrekturanzeige, die einem Bediener eine Abweichung von dem korrekten Wert der Längenkorrektur anzeigt.

Die Verschiebbarkeit der Anschlagschiene in Schienenlängsrichtung birgt die Gefahr, dass das Anschlaglineal die Sägelinie bei Änderung des Schwenkwinkels schneidet und somit eine Kollisionsgefahr mit dem Kreissägeblatt besteht. Die zweite Steuerungseinheit ist vorzugsweise eingerichtet, um eine solche Kollisionsgefahr zu erkennen. Beispielsweise kann die zweite Steuerungseinheit eingerichtet sein, in Abhängigkeit des Schwenkwinkels und der Position des Anschlaglineals in Schienenlängsrichtung ein Schneiden mit der Sägelinie zu berechnen.

In einer weiteren bevorzugten Ausführungsvariante ist vorgesehen, dass die Holzbearbeitungsmaschine ein Kreissägeblatt und einen die Anschlagschiene in Schienenlängsrichtung verfahrenden Schienenaktuator aufweist, und die zweite Steuerungseinheit eingerichtet ist, eine Beabstandung des dem Schiebeschlitten zugewandten Endes der Anschlagschiene zu dem Kreissägeblatt zu bestimmen, und den Schienenaktuator derart zu steuern, dass ein Kontakt zwischen der Anschlagschiene und dem Kreissägeblatt verhindert wird.

Gemäß einem weiteren Aspekt wird die eingangs genannte Aufgabe gelöst durch ein Verfahren zur Steuerung einer Holzbearbeitungsmaschine, insbesondere einer Formatkreissäge, gemäß Anspruch 16, mit einem Quertisch, der eine Anschlagschiene mit einer Anschlagklappe aufweist, umfassend Erzeugen eines Werkstückpositionssignals, wobei das Werkstückpositionssignal eine Positionierung eines Werkstücks an einer ersten Werkstückanschlagfläche oder an einer der ersten gegenüberliegend angeordneten zweiten Werkstückanschlagfläche der Anschlagschiene charakterisiert, Erzeugen eines ersten Klappensteuersignals, wenn das Werkstückpositionssignal eine Werkstückposition an der ersten Werkstückanschlagfläche charakterisiert oder Erzeugen eines zweiten Klappensteuersignals, wenn das Werkstückpositionssignal eine Werkstückposition an der zweiten Werkstückanschlagfläche charakterisiert, und Positionieren der Anschlagklappe in einer ersten Klappenposition auf einer ersten Seite der Anschlagschiene, wenn das erste Klappensteuersignal erzeugt wird, und in einer zweiten Klappenposition auf einer der ersten Seite gegenüberliegenden zweiten Seite der Anschlagschiene wenn das zweite

Klappensteuersignal erzeugt wird, wobei sich die Anschlagklappe bei einem Verfahren entlang der Anschlagschiene vorzugsweise in einer Verfahrposition befindet, wobei sich die Verfahrposition zwischen der ersten Klappenposition und der zweiten Klappenposition befindet.

Es ist ferner bevorzugt, dass das Verfahren die Schritte umfasst: Erfassen eines Schwenkwinkels des Anschlaglineals relativ zu einer von einem Kreissägeblatt gebildeten Sägelinie, beispielsweise mittels einer Winkelsensorik, insbesondere eines Winkelaufnehmers, und Ermitteln einer Längenkorrektur und/oder Ermitteln einer Kollisionsgefahr des Anschlaglineals mit dem Kreissägeblatt.

Das erfindungsgemäße Verfahren und seine möglichen Fortbildungen weisen Merkmale bzw. Verfahrensschritte auf, die sie insbesondere dafür geeignet machen, für einen erfindungsgemäßen Quertisch und seine Fortbildungen verwendet zu werden. Für weitere Vorteile, Ausführungsvarianten und Ausführungsdetails dieser weiteren Aspekte und ihrer möglichen Fortbildungen wird auch auf die zuvor erfolgte Beschreibung zu den entsprechenden Merkmalen und Fortbildungen des Quertisches verwiesen.

Bevorzugte Ausführungsbeispiele werden exemplarisch anhand der beiliegenden Figuren erläutert. Es zeigen:
- Figur 1:: eine perspektivische Ansicht einer Holzbearbeitungsmaschine, die mit einem erfindungsgemäßen Quertisch ausgerüstet ist;
- Figur 2:: eine perspektivische Ansicht eines Schiebeschlittens, der mit einem erfindungsgemäßen Quertisch ausgerüstet ist;
- Figur 3a,b,c,d:: perspektivische Ansichten eines Schiebeschlittens, der mit einem weiteren erfindungsgemäßen Quertisch ausgerüstet ist;
- Figur 4:: eine perspektivische Ansicht eines Kopplungselements;
- Figur 5:: eine zweidimensionale Ansicht einer Winkelverstelleinheit;
- Figur 6:: eine perspektivische Teilansicht des Schiebeschlittens mit einem erfindungsgemäßen Quertisch;
- Figur 7a,b,c,d:: perspektivische Ansichten eines Schiebeschlittens, der mit einem weiteren erfindungsgemäßen Quertisch ausgerüstet ist;
- Figur 8:: eine perspektivische Ansicht einer beispielhaften Ausführungsform einer Anschlagschiene; und
- Figur 9:: ein schematisches Verfahren zur Steuerung einer Holzbearbeitungsmaschine.

In den Figuren sind gleiche oder im Wesentlichen funktionsgleiche bzw. -ähnliche Elemente mit den gleichen Bezugszeichen bezeichnet.

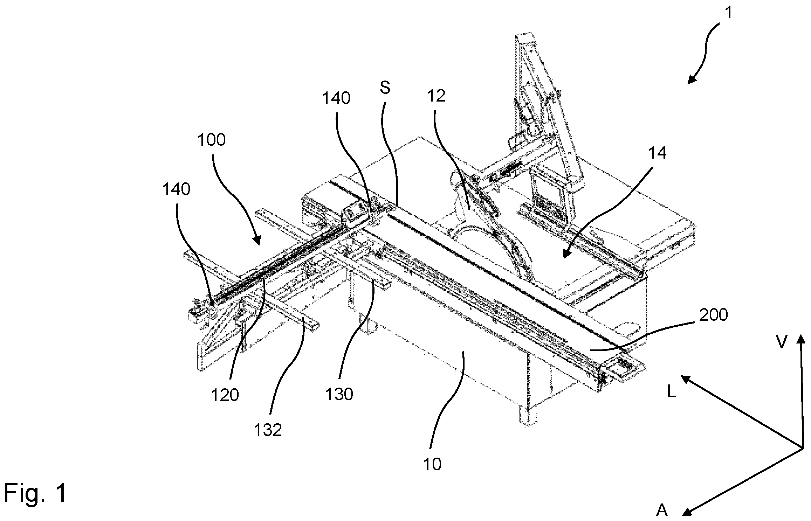

Figur 1 zeigt eine perspektivische Ansicht einer Holzbearbeitungsmaschine 1, die mit einem erfindungsgemäßen Quertisch 100 ausgerüstet ist. Die als Formatkreissäge ausgebildete Holzbearbeitungsmaschine 1 weist ein Grundgestell 10 und einen an dem Grundgestell 10 linear geführten Schiebeschlitten 200 auf, der in Richtung L horizontal verschiebbar ist. An dem Schiebeschlitten 200 ist ein in Richtung A auskragender Quertisch 100 angeordnet, dessen Werkstückauflagefläche im Wesentlichen durch in Richtung L hin- und her bewegbare Stützbalken 130, 132 gebildet wird. Der Quertisch 100 ist relativ zu dem Schiebeschlitten 200 um eine im Wesentlichen vertikale Achse in Richtung V schwenkbar. Die Sägelinie S wird von einem unter der Schutzhaube 12 verborgenen Kreissägeblatt gebildet, das vorzugsweise durch einen Sägeschlitz aus der zweiten Werkstückauflagefläche herausragt. Die Sägelinie S ist im Wesentlichen parallel zur Verfahrrichtung des Schlittens 200 ausgerichtet.

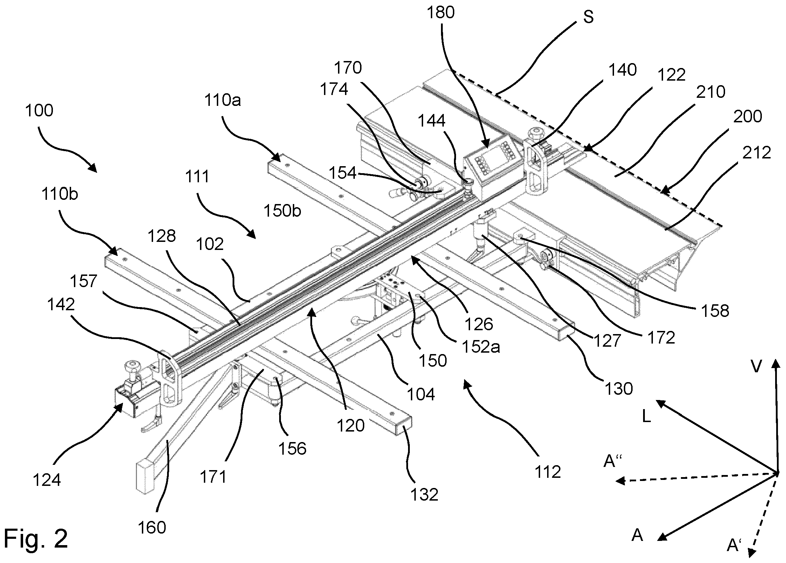

Figur 2 zeigt eine perspektivische Ansicht des in Figur 1 gezeigten Schiebeschlittens 200 mit dem erfindungsgemäßen Quertisch 100. Der Quertisch 100 ist an einem Schiebeschlitten 200 angeordnet. Der Quertisch 100 erstreckt sich in Auskragrichtung A von einem ersten Quertischende, das dem Schiebeschlitten 200 zugewandt ist, zu einem zweiten Quertischende, das dem Schiebeschlitten 200 abgewandt ist.

Der Quertisch 100 ist als Parallelogrammquertisch ausgebildet, der um eine im Wesentlichen vertikale Achse schwenkbar an dem Schiebeschlitten 200 angeordnet ist. Der Quertisch 100 umfasst einen Quertischrahmen, der unter anderem durch ein erstes Querrahmenelement 102 und ein parallel zu diesem angeordnetes zweites Querrahmenelement 104, ein erstes Kopplungselement 170 und ein zweites Kopplungselement 171 ausgebildet wird. Das erste Querrahmenelement 102 und das zweite Querrahmenelement 104 weisen jeweils eine parallel zur Auskragrichtung A ausgerichtete Stützbalkenlängserstreckung, die orthogonal zu einem Balkenquerschnitt ausgerichtet ist, auf. Das erste Querrahmenelement 102 ist mit seiner Stützbalkenlängserstreckung im Wesentlichen parallel zum zweiten Querrahmenelement 104 angeordnet. Das erste Querrahmenelement 102 ist in Längsrichtung L beabstandet von dem zweiten Querrahmenelement 104.

Die Querrahmenelemente 102, 104 sind mit ihren dem Schiebeschlitten 200 zugewandten Enden mit dem Kopplungselement 170 um eine vertikale Achse drehbar verbunden. Die Vertikale ist in der Figur 2 mit V bezeichnet. Diese Verbindung ist durch ein Drehgelenk 154, 158 realisiert. Die Querrahmenelement 102, 104 sind an einem Bereich angrenzend an das zweite Quertischende mit dem zweiten Kopplungselement 171 ebenfalls mit Drehgelenken 156, 157 verbunden. Mittels der Drehgelenke 154, 156, 157, 158 wird ein Parallelogramm-Quertisch ausgebildet. Die Auskragrichtung A des Quertisches 100 ist somit relativ zu der Sägelinie S veränderbar, sodass beispielsweise auch die Auskragrichtungen A' und A" eingestellt werden können.

Der Quertisch 100 weist ferner eine Anschlagschiene 120 auf. Die Anschlagschiene 120 erstreckt sich in Auskragrichtung A von einem ersten Schienenende 122 hin zu einem zweiten Schienenende 124. Das erste Schienenende 122 ist dem Schiebeschlitten 200 zugewandt. Das zweite Schienenende 124 ist dem Schiebeschlitten 200 abgewandt. Zwischen dem ersten Schienenende 122 und dem zweiten Schienenende 124 erstreckt sich die Anschlagschiene 120 in einer Schienenlängsrichtung. Die Schienenlängsrichtung ist im Wesentlichen parallel zu den Haupterstreckungsrichtungen der Querrahmenelemente 102, 104 ausgerichtet.

Die Anschlagschiene 120 ist mit dem ersten Kopplungselement 170 und dem zweiten Kopplungselement 171 in Schienenlängsrichtung bewegbar gekoppelt. Die Anschlagschiene 120 weist ferner in einem Bereich angrenzend an das erste Schienenende 122 einen vertikal nach unten auskragenden Zapfen auf, der in eine Schiebeschlittennut 212 eingreift. Das erste Kopplungselement 170 ist mit einer ersten Klemmvorrichtung 172 und einer dritten Klemmvorrichtung 174 mit dem Schiebeschlitten 200 gekoppelt, wobei die Klemmvorrichtungen 172, 174 eine Fixierung in Längsrichtung L gewährleisten.

Der Quertisch 100 weist eine erste Werkstückauflagefläche auf. Die erste Werkstückauflagefläche wird durch eine Auflagefläche 110a eines ersten Stützbalkens 130 und durch eine Auflagefläche 110b eines zweiten Stützbalkens 132 ausgebildet. Die Stützbalken 130, 132 sind in Längsrichtung L verschiebbar gelagert. Die Stützbalken 130, 132 können vorzugsweise auch in den Auskragrichtungen A, A`, A" bewegt werden. Insbesondere ist es bevorzugt, dass der zweite Stützbalken 132 lediglich in Längsrichtung L bewegbar angeordnet ist und der erste Stützbalken 130 in Längsrichtung L und in Auskragrichtungen A, A`, A" bewegbar angeordnet ist.

Durch die Möglichkeit der Bewegung des Stützbalkens 130 und des Stützbalkens 132 in Längsrichtung L kann die Werkstückauflagefläche des Quertisches 100 im Wesentlichen auf der ersten Seite 112 oder auf der zweiten Seite 111 ausgebildet werden. Je nachdem, ob ein Werkstück an der ersten Werkstückanschlagfläche 126 oder an der dieser gegenüberliegend angeordneten zweiten Werkstückanschlagfläche angeordnet ist können der erste Stützbalken 130 und der zweite Stützbalken 132 auf die Seite 111, 112 bewegt werden, auf der das Werkstück angeordnet werden soll.

Der als Parallelogramm-Quertisch ausgebildete Quertisch 100 weist eine Winkelverstelleinheit 150 auf. Mittels der Winkelverstelleinheit 150 kann ein definierter Winkel zwischen der Auskragrichtung des Quertisches 100 und der Sägelinie S eingestellt werden. Die Winkelverstelleinheit 150 ist ebenfalls mit Drehgelenken 152a, 152 b an dem Quertischrahmen befestigt.

Eine zweite Klemmvorrichtung 127 ist dafür vorgesehen, dass der Längenausgleich fixiert werden kann. Darüber hinaus weist die Anschlagschiene 120 eine erste Anschlagklappe 140 und eine zweite Anschlagklappe 142 auf. Die Anschlagklappen 140, 142 sind mit Rastbolzen 144 an der Anschlagschiene fixierbar. Die Anschlagklappen 140, 142 befinden sich in einer zweiten Klappenposition. Darüber hinaus weist die Anschlagschiene 120 eine Steuerungseinheit 180 auf.

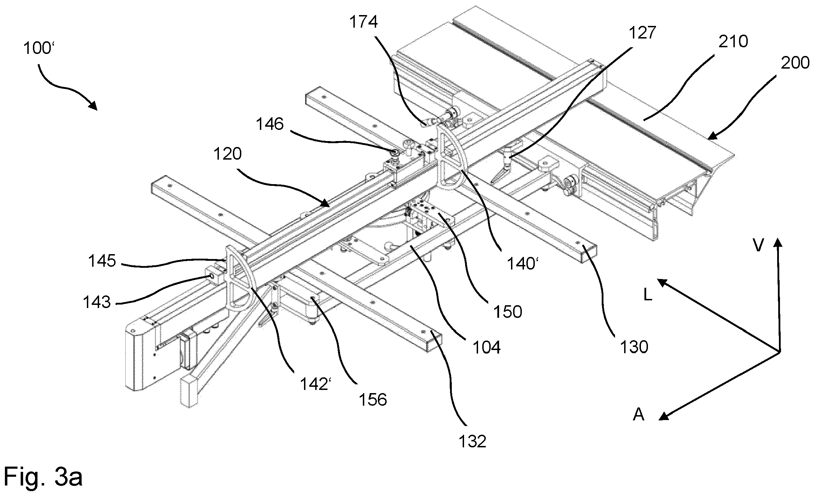

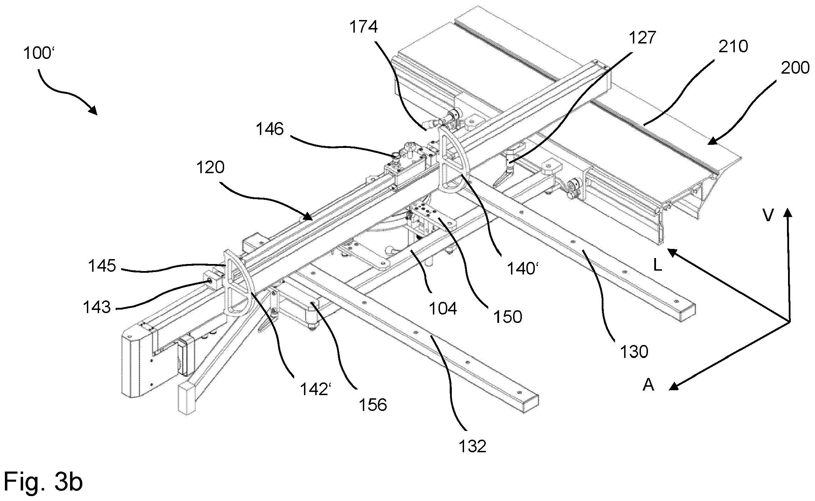

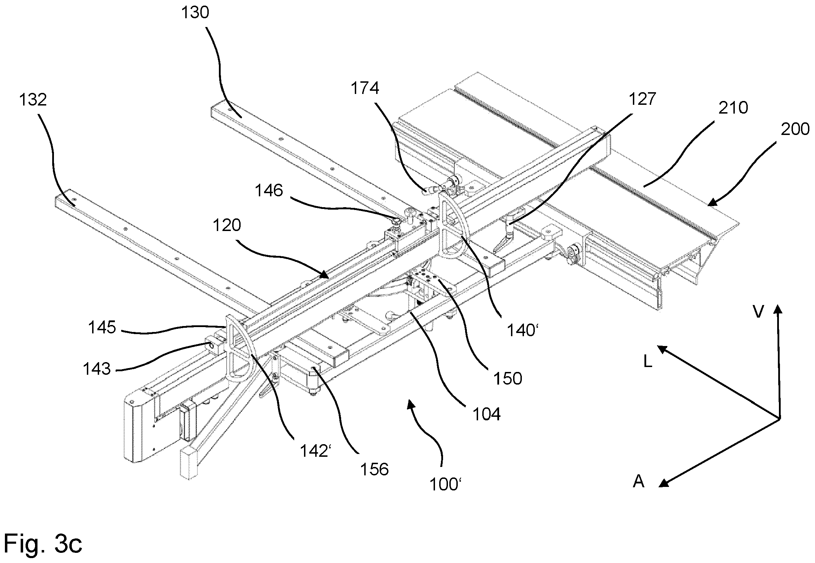

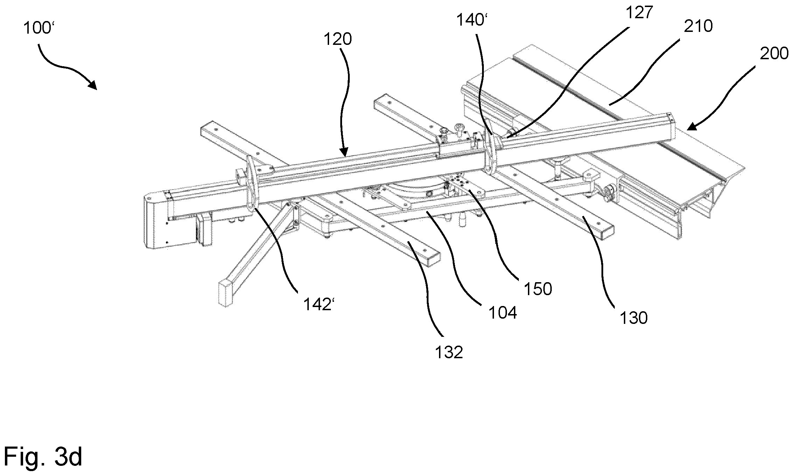

Die Figuren 3a,b,c,d zeigen eine perspektivische Ansicht eines Schiebeschlittens, der mit einem weiteren erfindungsgemäßen Quertisch ausgerüstet ist. Der Quertisch 100' unterscheidet sich im Wesentlichen von dem im Vorherigen beschriebenen Quertisch 100 durch die motorisch verstellbaren Anschlagklappen 140', 142`. Die Anschlagklappe 142` weist einen Klappenschwenkaktuator 143 und einen Auszug 145 auf. Die Anschlagklappen 140`, 142` sind vorzugsweise beide mit einem Klappenschwenkaktuator entlang der Anschlagschiene 120 bewegbar.

Die Figur 3b zeigt die Stützbalken 130, 132 in einer ersten Position, in der die Auflageflächen der Stützbalken 130, 132 im Wesentlichen horizontal vor der Anschlagschiene 120 angeordnet sind und einen ersten Auflagebereich bilden. Ein Werkstück kann somit vor die Auflageschiene 120 gelegt werden. In dieser Position wird das Werkstück von einem Bediener gegen die Anschlagschiene 120 geschoben und somit relativ zu einem Kreissägeblatt bewegt.

In der Figur 3c befinden sich die Stützbalken 130, 132 in einer zweiten Position, in der die Auflageflächen der Stützbalken 130, 132 im Wesentlichen horizontal hinter der Anschlagschiene 120 angeordnet sind und einen zweiten Auflagebereich bilden. Ein Werkstück kann somit besonders bevorzugt hinter die Auflageschiene platziert werden und von einem Bediener mit der Anschlagschiene 120 geschoben werden.

Um von einer Bearbeitung vor der Schiene zu einer Bearbeitung hinter der Schiene zu wechseln, ist es im Stand der Technik erforderlich, die Anschlagschiene zu demontieren und an einer anderen Position des Quertisches wieder zu befestigen, woran anschließend noch eine Kalibrierung erforderlich ist. Bei dem Quertisch 100' erfolgt dies durch ein Verschieben der Stützbalken 130, 132 in Längsrichtung L. Insbesondere wird hierdurch keine Kalibrierung der Anschlagschiene 120 erforderlich.

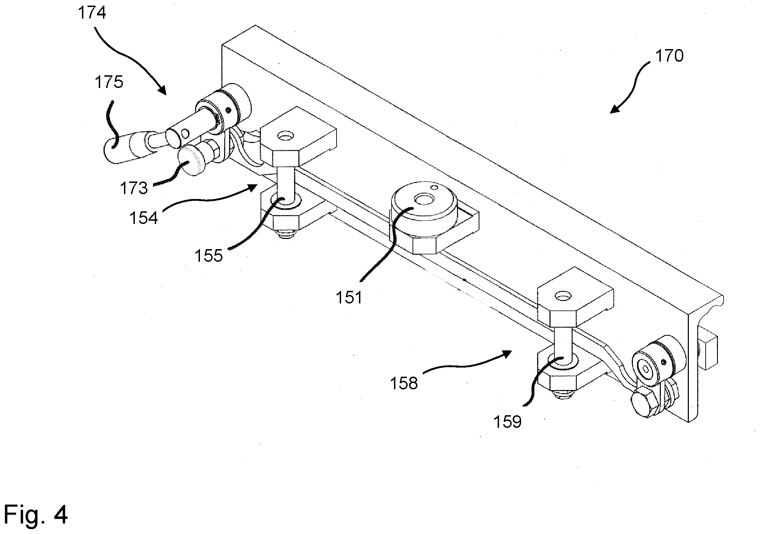

Figur 4 zeigt eine perspektivische Ansicht eines Kopplungselements. Das erste Kopplungselement 170 weist die im Vorherigen bereits beschriebenen Drehgelenke 154, 158 auf. Die Drehgelenke 154, 158 bilden eine Bolzenverbindung mit dem Quertisch 100, 100' aus. Hierfür sind Bolzen 155, 159 an den Drehgelenken 154, 158 vorgesehen. Darüber hinaus weist das erste Kopplungselement 170 eine Aufnahme 151 für die Anschlagschiene auf. Die dritte Klemmvorrichtung 174 weist zum Lösen und zum Feststellen der dritten Klemmvorrichtung 174 einen Hebel 175 auf. Darüber hinaus umfasst die Klemmvorrichtung einen Verriegelungsbolzen 173 zum Verriegeln der Klemmvorrichtung 174.

Die erste Klemmvorrichtung 172 und die dritte Klemmvorrichtung 174 können miteinander gekoppelt sein. Insbesondere ist es bevorzugt, dass mit dem Hebel 175 die dritte Klemmvorrichtung 174 und die erste Klemmvorrichtung 172 gelöst und festgestellt werden kann. Analog ist es bevorzugt, dass mit dem Hebel der ersten Klemmvorrichtung 172 die dritte Klemmvorrichtung 174 und die erste Klemmvorrichtung 172 gelöst und festgestellt werden kann. Infolgedessen ist eine einseitige Lösung beider Klemmvorrichtungen 172, 174 möglich.

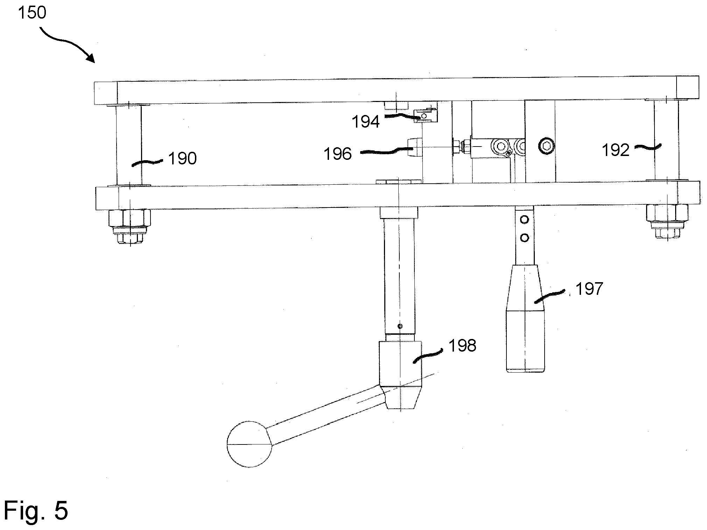

Figur 5 zeigt eine zweidimensionale Ansicht einer Winkelverstelleinheit. Die Winkelverstelleinheit 150 ist wie im Vorherigen beschrieben mittels Drehgelenken mit den Querrahmenelementen 102, 104 gekoppelt. Hierfür sind Bolzen 190, 192 vorgesehen. Die Winkelverstelleinheit 150 weist ferner einen Klemmhebel 198 auf, mit dem ein eingestellter Winkel fixiert werden kann, sodass sich dieser bei der Bearbeitung eines Werkstücks im Wesentlichen nicht verändert. Der Quertisch 100, 100' ist derart ausgebildet, dass eine 90°-Fixierung des Anschlaglineals 120 ermöglicht wird. Das bedeutet, dass die Werkstückanschlagflächen im 90°-Winkel zur Sägelinie S ausgerichtet sind.

Zur Realisierung dessen weist die Winkelverstelleinheit 150 einen Indexbolzen 196 auf. Der Indexbolzen 196 wird mittels eines Hebels 197 betätigt. Die Winkelverstelleinheit 150 weist darüber hinaus einen Sensor 194 zur Längenkorrektur auf. Dieser kann beispielsweise als kapazitativer Sensor oder als Reflexlichtschranke ausgebildet sein.

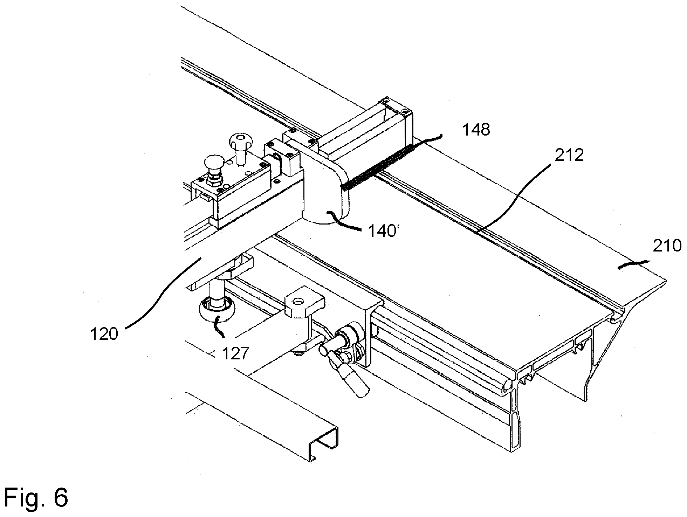

Figur 6 zeigt eine perspektivische Teilansicht des Schiebeschlittens mit einem erfindungsgemäßen Quertisch. Die Anschlagschiene 120 ist mittels eines nicht gezeigten Zapfens in der Schiebeschlittennut 212 geführt. Die Anschlagschiene 120 weist in der in Figur 6 gezeigten Ausführungsvariante einen Sensor 148 auf. Der Sensor 148 ist zur Erkennung eines Werkstücks ausgebildet. Die Anschlagschiene 120 weist vorzugsweise auf der gegenüberliegenden Seite des Sensors 148 einen analog zu dem Sensor 148 ausgebildeten weiteren Sensor zur Werkstückerkennung auf.

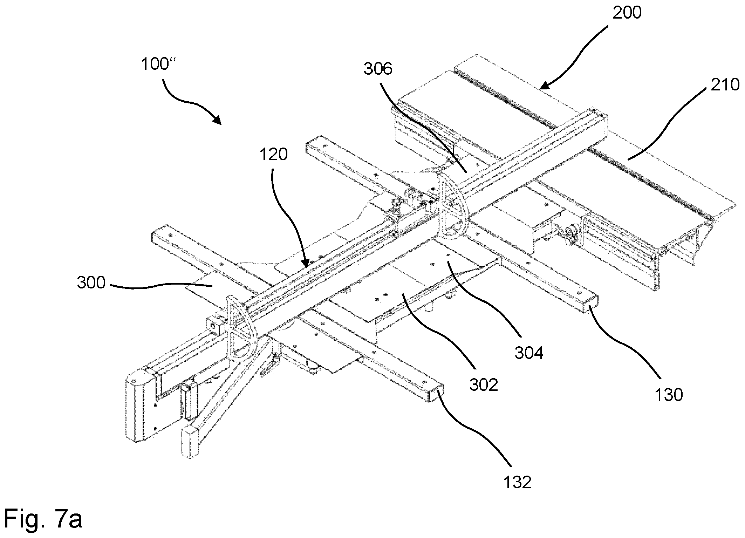

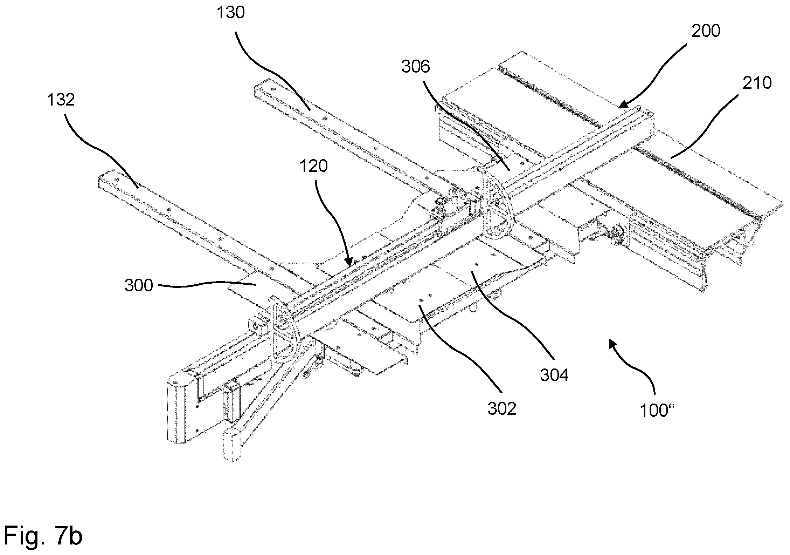

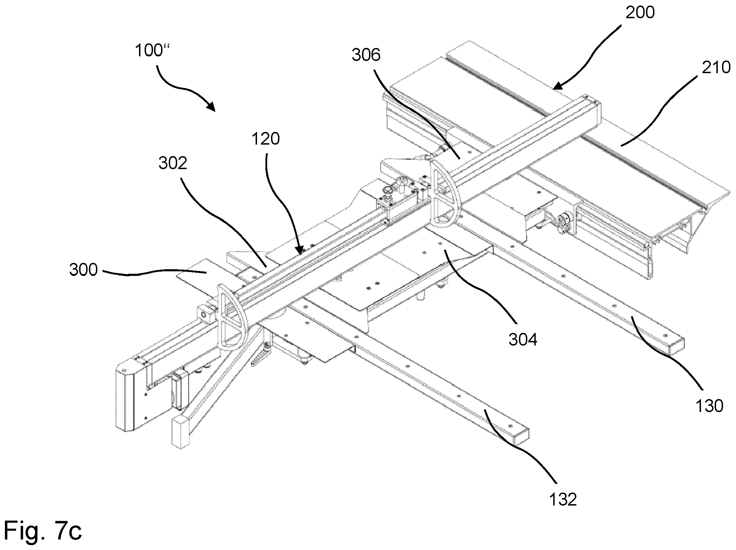

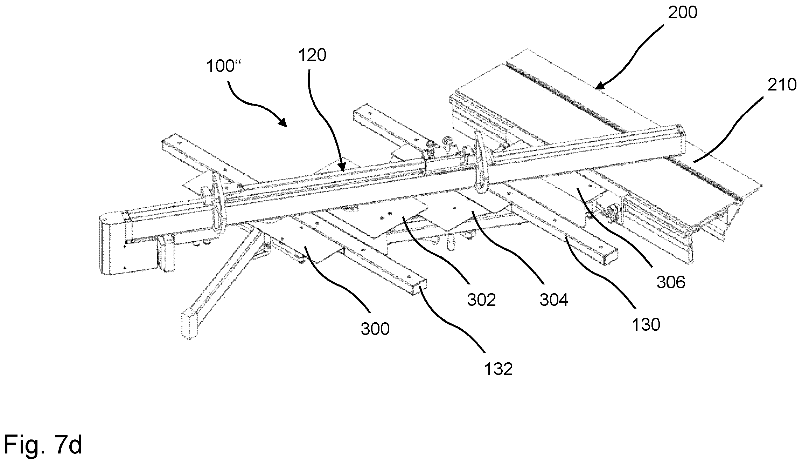

Die Figuren 7a,b,c,d zeigen perspektivische Ansichten eines Schiebeschlittens, der mit einem weiteren erfindungsgemäßen Quertisch 100" ausgerüstet ist. Der Quertisch 100" weist Bleche 300, 302, 304, 306 mit horizontalen Flächen auf. Das Blech 300 ist an der Längsseite des zweiten Stützbalkens 132 angeordnet, die dem Schiebeschlitten 200 abgewandt ist. Das Blech 302 ist auf der gegenüberliegenden Längsseite des zweiten Stützbalkens 132 angeordnet. Analog sind das Blech 304 auf der dem Schiebeschlitten 200 abgewandten Längsseite des ersten Stützbalkens 130 und das Blech 306 auf der dem Schiebeschlitten 200 zugewandten Längsseite des Stützbalkens 130 angeordnet. Die Bleche 302, 304 sind, wie insbesondere aus der Figur 7d ersichtlich, überlappend angeordnet. Durch diese überlappende Anordnung ergeben sich neben dem Lineal keine verletzungsgefährdende Quetschstellen an Teilen des Rahmens, wenn eine Anschlagklappe motorisch entlang des Anschlaglineals verfahren wird. Auch bei Verschwenken des Lineals und des Quertisches entstehen durch die Überlappung keine Lücken, Spalte oder dergleichen, die sich öffnen oder schließen und hierdurch verletzungsgefährdende Quetschstellen.

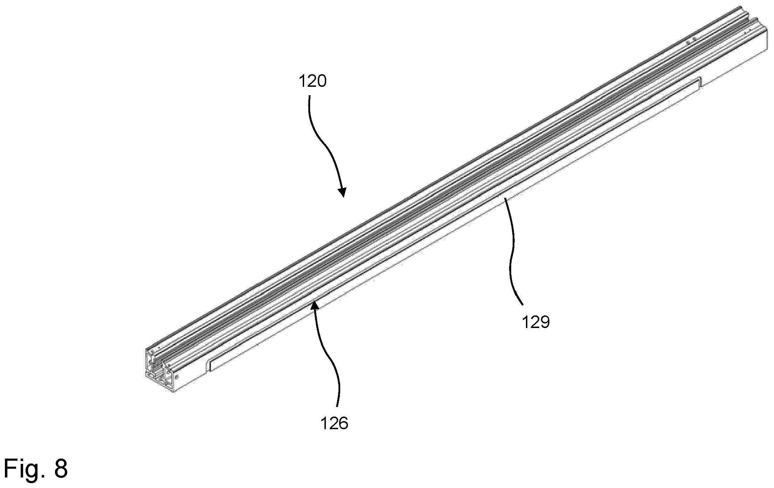

Figur 8 zeigt eine perspektivische Ansicht einer beispielhaften Ausführungsform einer Anschlagschiene. Die Anschlagschiene 120 weist an der ersten Werkstückanschlagfläche 126 eine federnde Anschlagleiste 129 auf. Die Anschlagleiste 129 ist vorzugsweise mit einer Positionsabfrageeinrichtung signaltechnisch gekoppelt.

Wenn ein Werkstück an der ersten Werkstückanschlagfläche 126 angeordnet wird, wird die federnde Anschlagleiste 129 auf den Hauptkörper der Anschlagschiene 120 gedrückt. Durch geeignete Sensoren wird die Bewegung der Anschlagleiste 129 detektiert, sodass wiederum ein Anliegen eines Werkstücks an der ersten Werkstückanschlagfläche 126 detektiert werden kann.

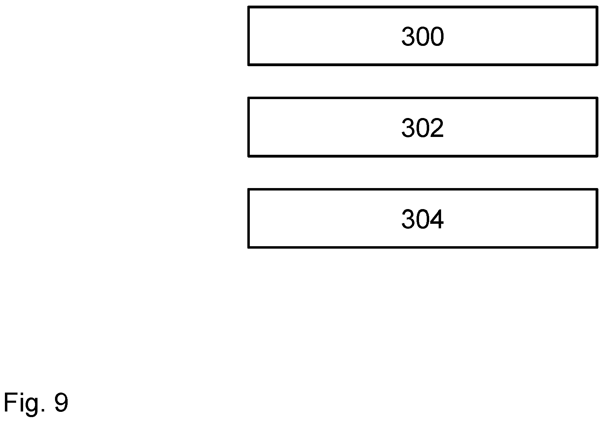

Figur 9 zeigt ein schematisches Verfahren zur Steuerung einer Holzbearbeitungsmaschine, insbesondere einer Formatkreissäge, mit einem Quertisch, der eine Anschlagschiene mit einer Anschlagklappe aufweist. In Schritt 300 wird ein Werkstückpositionssignal erzeugt, wobei das Werkstückpositionssignal eine Positionierung eines Werkstücks an einer ersten Werkstückanschlagfläche oder an einer der ersten gegenüberliegend angeordneten zweiten Werkstückanschlagfläche der Anschlagschiene charakterisiert.

In Schritt 302 wird ein erstes Klappensteuersignal erzeugt, wenn das Werkstückpositionssignal eine Werkstückposition an der ersten Werkstückanschlagfläche charakterisiert oder ein zweites Klappensteuersignal erzeugt, wenn das Werkstückpositionssignal eine Werkstückposition an der zweiten Werkstückanschlagfläche charakterisiert. In Schritt 304 wird die Anschlagklappe in einer ersten Klappenposition auf einer ersten Seite der Anschlagschiene positioniert, wenn das erste Klappensteuersignal erzeugt wird, und in einer zweiten Klappenposition auf einer der ersten Seite gegenüberliegenden zweiten Seite der Anschlagschiene positioniert, wenn das zweite Klappensteuersignal erzeugt wird.

### BEZUGSZEICHEN

- 1: Holzbearbeitungsmaschine
- 10: Gestell
- 12: Schutzhaube
- 14: zweite Werkstückauflagefläche
- 100, 100', 100": Quertisch
- 102: erstes Querrahmenelement
- 104: zweites Querrahmenelement
- 110a, b: Auflagefläche
- 111: zweite Seite
- 112: erste Seite
- 120: Anschlagschiene
- 122: erstes Schienenende
- 124: zweites Schienenende
- 126: erste Werkstückanschlagfläche
- 127: zweite Klemmvorrichtung
- 128: Klappenschiene
- 129: federnde Anschlagleiste
- 130: erster Stützbalken
- 132: zweiter Stützbalken
- 140, 140': erste Anschlagklappe
- 142, 142': zweite Anschlagklappe
- 143: Klappenschwenkaktuator
- 144: Rastbolzen
- 145: Auszug
- 146: Rastbolzen
- 148: Sensor
- 150: Winkelverstelleinheit
- 151: Aufnahme
- 152a,b: Drehgelenk
- 154: Drehgelenk
- 155: Bolzen
- 156: Drehgelenk
- 157: Drehgelenk
- 158: Drehgelenk
- 159: Bolzen
- 160: Kröpfelement
- 170: erstes Kopplungselement
- 171: zweites Kopplungselement
- 172: erste Klemmvorrichtung
- 173: Verriegelungsbolzen
- 174: dritte Klemmvorrichtung
- 175: Hebel
- 176: Verriegelungsbolzen
- 180: Steuerungseinheit
- 190: Bolzen
- 192: Bolzen
- 194: Sensor
- 196: Indexbolzen
- 197: Hebel
- 198: Klemmhebel
- 200: Schiebeschlitten
- 210: zweite Werkstückauflagefläche
- 212: Schiebeschlittennut
- A, A`, A": Auskragrichtung
- L: Längsrichtung
- V: Vertikalrichtung

## Patentansprüche

1. Quertisch (100, 100', 100") für eine Holzbearbeitungsmaschine (1), insbesondere für eine Formatkreissäge, umfassend:
- einen Quertischrahmen (102, 104, 170, 171),
- eine horizontal liegende erste Werkstückauflagefläche (110a, 110b),
- eine an dem Quertischrahmen oberhalb der ersten Werkstückauflagefläche befestigte Anschlagschiene (120) mit
∘ einer ersten vertikal stehenden Werkstückanschlagfläche (126) auf einer ersten Seite (112) der Anschlagschiene, die so angeordnet ist, dass ein auf der ersten Werkstückauflagefläche in einem horizontal vor der Anschlagschiene (120) angeordneten ersten Auflagebereich aufliegendes plattenförmiges Werkstück mit einer Seitenkante an der ersten Werkstückanschlagfläche (126) angelegt werden kann,
o einer zweiten vertikal stehenden Werkstückanschlagfläche auf einer zweiten, der ersten Seite (112) gegenüberliegenden Seite (111) der Anschlagschiene, wobei die zweite Werkstückanschlagfläche so angeordnet ist, dass ein auf der ersten Werkstückauflagefläche in einem horizontal hinter der Anschlagschiene angeordnetem zweiten Auflagebereich aufliegendes plattenförmiges Werkstück mit einer Seitenkante an der zweiten Werkstückanschlagfläche angelegt werden kann,
**dadurch gekennzeichnet, dass**
- die erste Werkstückauflagefläche durch eine Auflagefläche (110a, 110b) eines Stützbalkens (130, 132) gebildet wird, und
- der Stützbalken relativ zu dem Quertischrahmen hin- und her bewegbar angeordnet ist, sodass der Abstand des vorderen Stützbalkenendes und des hinteren Stützbalkenendes zur Anschlagschiene (120) variabel ist, also vergrößert und verringert werden kann.

2. Quertisch gemäß Anspruch 1,
**dadurch gekennzeichnet, dass**
der Stützbalken zwischen
∘ einer ersten Position, in der die Auflagefläche des Stützbalkens im Wesentlichen horizontal vor der Anschlagschiene angeordnet ist und den ersten Auflagebereich bildet, und
∘ einer zweiten Position, in der die Auflagefläche des Stützbalkens im Wesentlichen horizontal hinter der Anschlagschiene angeordnet ist und den zweiten Auflagebereich bildet,
hin- und her bewegbar ist.

3. Quertisch gemäß einem der vorherigen Ansprüche,
**dadurch gekennzeichnet, dass**
der Quertisch ein erstes Kopplungselement zur Kopplung des Quertischs mit einem Schiebeschlitten einer Holzbearbeitungsmaschine umfasst, wobei das erste Kopplungselement vorzugsweise an einer Schiebeschlittenschiene des Schiebeschlittens horizontal führbar ist und ferner vorzugsweise mindestens ein Klemmelement zur Fixierung des ersten Kopplungselements an der Schiebeschlittenschiene umfasst.

4. Quertisch gemäß einem der vorherigen Ansprüche,
**dadurch gekennzeichnet, dass**
der Quertisch als Parallelogrammquertisch ausgebildet ist.

5. Quertisch gemäß einem der vorherigen Ansprüche,
**dadurch gekennzeichnet, dass**
der Quertisch ein erstes Querrahmenelement und ein zweites Querrahmenelement aufweist, welche
- parallel zueinander angeordnet sind,
- horizontal voneinander beabstandet angeordnet sind und
- parallel zueinander verschiebbar miteinander gekoppelt sind, indem das erste und zweite Querrahmenelement über ein Längsrahmenelement gelenkig miteinander verbunden sind,
wobei sich die Anschlagschiene im Wesentlichen parallel zu dem ersten Querrahmenelement und zu dem zweiten Querrahmenelement erstreckt, und vorzugsweise von dem ersten Querrahmenelement und dem zweiten Querrahmenelement einen im Wesentlichen gleich großen Abstand aufweist,
wobei vorzugsweise
- das erste Querrahmenelement und das Längsrahmenelement durch eine Winkelverstelleinheit miteinander verbunden sind und die Winkelverstelleinheit eingerichtet ist, um eine Verschwenkung des ersten Querrahmenelements zu dem Längsrahmenelement und eine Parallelverschiebung des ersten Querrahmenelements relativ zu dem zweiten Querrahmenelement zu bewirken, und
- der zumindest eine Stützbalken durch das erste und zweite Querrahmenelement vertikal abgestützt wird.

6. Quertisch gemäß einem der vorherigen Ansprüche,
**gekennzeichnet durch**
ein Führungselement, das ausgebildet ist, um den Stützbalken in horizontaler Richtung zu führen,
wobei vorzugsweise das Führungselement an dem ersten Querrahmenelement und/oder an dem zweiten Querrahmenelement angeordnet ist.

7. Quertisch gemäß einem der vorherigen Ansprüche,
**dadurch gekennzeichnet, dass**
der Quertisch zwei oder mehr Stützbalken umfasst, wobei die zwei oder mehr Stützbalken horizontal voneinander beabstandet sind.

8. Quertisch gemäß einem der vorherigen Ansprüche,
**gekennzeichnet durch** ein Kröpfelement, das mit einem ersten Kröpfende an einem Bereich angrenzend an ein Quertischende angeordnet ist und ein zweites Kröpfende von dem Quertischende beabstandet ist.

9. Quertisch gemäß einem der vorherigen Ansprüche,
**gekennzeichnet durch**
eine entlang der Anschlagschiene verfahrbar gelagerte Anschlagklappe, die eine vertikal stehende und senkrecht zur ersten und/oder zweiten Werkstückanschlagfläche ausgerichtete Anschlagklappenfläche aufweist, und vorzugsweise einen Anschlagklappenschwenkaktuator, der angeordnet und ausgebildet ist, um die Anschlagklappe zwischen der ersten Klappenposition und der zweiten Klappenposition zu bewegen,
wobei vorzugsweise die Anschlagklappe zwischen zwei Klappenpositionen verstellbar ist und in einer ersten Klappenposition oberhalb des ersten Auflagebereichs angeordnet ist und in einer zweiten Klappenposition oberhalb des zweiten Auflagebereichs angeordnet ist, wobei vorzugsweise die Anschlagklappe um eine im Wesentlichen horizontale Achse zwischen den beiden Klappenpositionen klappbar angeordnet ist, und
wobei der Anschlagklappenschwenkaktuator vorzugsweise angeordnet und ausgebildet ist, um die Anschlagklappe in eine Verfahrposition zu bewegen, wobei die Verfahrposition zwischen der ersten Klappenposition und der zweiten Klappenposition angeordnet ist, und vorzugsweise die Anschlagklappe in der Verfahrposition vertikal ausgerichtet ist.

10. Holzbearbeitungsmaschine (1), insbesondere Formatkreissäge, umfassend einen Quertisch (100, 100', 100") nach einem der vorherigen Ansprüche, der entlang einer Arbeitsrichtung (L) beweglich relativ zu einem Werkzeug an einem Maschinengestell (10) gelagert ist.

11. Holzbearbeitungsmaschine gemäß dem vorherigen Anspruch 10,
**dadurch gekennzeichnet, dass**
diese einen relativ zu dem Maschinengestell linear verfahrbaren Schiebeschlitten aufweist, wobei der Quertisch an dem Schiebeschlitten angeordnet ist. wobei der Quertisch vorzugsweise um eine im Wesentlichen vertikale Tischschwenkachse schwenkbar an dem Schiebeschlitten angeordnet ist. und weiter vorzugsweise der Quertisch als Parallelogrammquertisch ausgebildet ist und um die im Wesentlichen vertikale Tischschwenkachse schwenkbar an dem Schiebeschlitten angeordnet ist, wobei vorzugsweise der Quertisch mittels zwei Drehgelenken an dem Schiebeschlitten befestigt ist.
und/oder der Quertisch mittels eines ersten Kopplungselements an dem Schiebeschlitten angeordnet ist, und das erste Kopplungselement parallel zur Arbeitsrichtung bewegbar an dem Schiebeschlitten angeordnet ist, wobei vorzugsweise das erste Kopplungselement an einer Schiebeschlittenschiene geführt ist und ferner vorzugsweise mindestens ein Klemmelement an dem ersten Kopplungselement angeordnet ist, das ausgebildet ist, um das erste Kopplungselement an der Schiebeschlittenschiene zu fixieren.

12. Holzbearbeitungsmaschine gemäß einem der vorherigen Ansprüche 10 oder 11, **dadurch gekennzeichnet, dass**
der Schiebeschlitten eine zweite, fluchtend zur ersten angeordnete Werkstückauflagefläche zur Auflage des Werkstücks aufweist und die Anschlagschiene um eine vertikale Anschlagschienenschwenkachse schwenkbar angeordnet ist,

13. Holzbearbeitungsmaschine gemäß einem der vorherigen Ansprüche 10-12,
**gekennzeichnet durch**
eine Erkennungsvorrichtung, umfassend
- einen Klappensensor, um die erste Klappenposition und die zweite Klappenposition und vorzugsweise die Verfahrposition der Anschlagklappe zu erkennen, und/oder
- einen Werkstücksensor, um ein Werkstück an der ersten Werkstückanschlagfläche und/oder an der zweiten Werkstückanschlagfläche zu erkennen.

14. Holzbearbeitungsmaschine gemäß einem der vorherigen Ansprüche 11-13 umfassend
eine erste Steuerungseinheit zur Steuerung des Anschlagklappenschwenkaktuators,
wobei die erste Steuerungseinheit eingerichtet ist, ein Werkstückpositionssignal von der Erkennungsvorrichtung zu empfangen, wobei das Werkstückpositionssignal eine Positionierung eines Werkstücks an der ersten Werkstückanschlagfläche oder der zweiten Werkstückanschlagfläche charakterisiert, und
wobei die erste Steuerungseinheit ferner eingerichtet ist, ein erstes Klappensteuersignal zu erzeugen, wenn das Werkstückpositionssignal eine Werkstückposition an der ersten Werkstückanschlagfläche charakterisiert, und ein zweites Klappensteuersignal zu erzeugen, wenn das Werkstückpositionssignal eine Werkstückposition an der zweiten Werkstückanschlagfläche charakterisiert,
wobei der Anschlagklappenschwenkaktuator eingerichtet ist, die Anschlagklappe in der ersten Klappenposition zu positionieren, wenn das erste Klappensteuersignal empfangen wird, und in der zweiten Klappenposition zu positionieren, wenn das zweite Klappensteuersignal empfangen wird.

15. Holzbearbeitungsmaschine gemäß einem der vorherigen Ansprüche 10-14,
**dadurch gekennzeichnet, dass**
die Holzbearbeitungsmaschine ein Kreissägeblatt, einen die Anschlagschiene in Schienenlängsrichtung verfahrenden Schienenaktuator und eine zweite Steuerungseinheit aufweist, und
die zweite Steuerungseinheit eingerichtet ist, eine Beabstandung des dem Schiebeschlitten zugewandten Endes der Anschlagschiene zu dem Kreissägeblatt zu bestimmen, und den Schienenaktuator derart zu steuern, dass ein Kontakt zwischen der Anschlagschiene und dem Kreissägeblatt verhindert wird.

16. Verfahren zur Steuerung einer Holzbearbeitungsmaschine, insbesondere einer Formatkreissäge, mit einem Quertisch, der eine Anschlagschiene (120) mit einer Anschlagklappe (140, 140', 142, 142') aufweist, umfassend Erzeugen (300) eines Werkstückpositionssignals, wobei das Werkstückpositionssignal eine Positionierung eines Werkstücks an einer ersten Werkstückanschlagfläche (126) oder an einer der ersten gegenüberliegend angeordneten zweiten Werkstückanschlagfläche der Anschlagschiene (120) charakterisiert Erzeugen (302) eines ersten Klappensteuersignals, wenn das Werkstückpositionssignal eine Werkstückposition an der ersten Werkstückanschlagfläche (126) charakterisiert oder Erzeugen eines zweiten Klappensteuersignals, wenn das Werkstückpositionssignal eine Werkstückposition an der zweiten Werkstückanschlagfläche charakterisiert, und Positionieren (304) der Anschlagklappe (140, 140', 142, 142') in einer ersten Klappenposition auf einer ersten Seite (112) der Anschlagschiene, wenn das erste Klappensteuersignal erzeugt wird, und in einer zweiten Klappenposition auf einer der ersten Seite gegenüberliegenden zweiten Seite der Anschlagschiene (120), wenn das zweite Klappensteuersignal erzeugt wird, wobei sich die Anschlagklappe bei einem Verfahren entlang der Anschlagschiene (120) vorzugsweise in einer Verfahrposition befindet, wobei sich die Verfahrposition zwischen der ersten Klappenposition und der zweiten Klappenposition befindet.

## Claims

1. Cross table (100, 100', 100") for a woodworking machine (1), in particular for a sliding table saw, comprising:
- a cross table frame (102, 104, 170, 171),
- a horizontally lying first workpiece support surface (110a, 110b),
- a stop rail (120) fastened to the cross table frame above the first workpiece support surface, with
∘ a first vertically standing workpiece stop surface (126) on a first side (112) of the stop rail, which is arranged such that a plate-shaped workpiece resting on the first workpiece support surface in a first abutment region arranged horizontally in front of the stop rail (120) can be placed with a side edge against the first workpiece stop surface (126),
∘ a second vertically standing workpiece stop surface on a second side (111) of the stop rail opposite the first side (112), the second workpiece stop surface being arranged in such a way that a plate-shaped workpiece resting on the first workpiece support surface in a second support region arranged horizontally behind the stop rail can be placed with a side edge against the second workpiece stop surface,
**characterized in that**
- the first workpiece support surface is formed by a support surface (110a, 110b) of a support beam (130, 132), and
- the support beam is arranged reciprocally movable relative to the cross table frame so that the distance of the front support beam end and the rear support beam end to the stop rail (120) is variable, i.e. can be increased and decreased.

2. Cross table according to claim 1,
**characterized in that**
the support beam can be moved back and forth between
∘ a first position in which the support surface of the support beam is arranged substantially horizontally in front of the stop rail and forms the first support area, and
∘ a second position in which the support surface of the support beam is arranged substantially horizontally behind the stop rail and forms the second support area.

3. Cross table according to any of the previous claims,
**characterized in that**
the cross table comprises a first coupling element for coupling the cross table to a sliding carriage of a woodworking machine, wherein the first coupling element is preferably horizontally guidable on a sliding carriage rail of the sliding carriage and further preferably comprises at least one clamping element for fixing the first coupling element to the sliding carriage rail.

4. Cross table according to any of the previous claims,
**characterized in that**
the cross table is designed as a parallelogram cross table.

5. Cross table according to any of the previous claims,
**characterized in that**
the cross table comprises a first cross frame element and a second cross frame element, which
- are arranged parallel to each other,
- are arranged horizontally spaced from each other and
- are coupled to one another so as to be displaceable parallel to one another, **in that** the first and second cross frame elements are connected to one another in an articulated manner via a longitudinal frame element,
wherein the stop rail extends substantially parallel to the first cross frame element and to the second cross frame element, and
preferably has a substantially equal distance from the first cross frame element and the second cross frame element,
Wherein preferably
- the first cross frame element and the longitudinal frame element are interconnected by an angular displacement unit, and the angular displacement unit is arranged to cause pivoting of the first cross frame element relative to the longitudinal frame element and parallel displacement of the first cross frame element relative to the second cross frame element, and
- the at least one support beam is vertically supported by the first and second cross frame elements.

6. Cross table according to any of the previous claims,
**characterized by**
a guide element designed to guide the support beam in the horizontal direction, wherein preferably the guide element is arranged on the first cross frame element and/or on the second cross frame element.

7. Cross table according to any of the previous claims,
**characterized in that**
the cross table comprises two or more support beams, the two or more support beams being horizontally spaced apart.

8. Cross table according to any of the previous claims,
**characterized by** a crank member having a first crank end disposed at a region adjacent a cross table end and a second crank end spaced from the cross table end.

9. Cross table according to any of the previous claims,
**characterized by**
a stop flap mounted for movement along the stop rail and having a vertically standing stop flap surface aligned perpendicular to the first and/or second workpiece stop surface, and preferably a stop flap pivot actuator arranged and configured to move the stop flap between a first flap position and a second flap position,
wherein preferably the stop flap is adjustable between the two flap positions and is arranged in the first flap position above the first support area and is arranged in the second flap position above the second support area, wherein preferably the stop flap is arranged to be pivotable about a substantially horizontal axis between the two flap positions, and
wherein a stop flap pivot actuator is preferably arranged and configured to move the stop flap into a travel position, wherein the travel position is arranged between the first flap position and the second flap position, and preferably the stop flap is vertically aligned in the travel position.

10. Woodworking machine (1), in particular sliding table saw,
comprising a cross table (100, 100', 100") according to any one of the preceding claims, which is mounted on a machine frame (10) for movement along a working direction (L) relative to a tool.

11. Woodworking machine according to the preceding claim 10,
**characterized in that**
it has a sliding carriage that can be moved linearly relative to the machine frame, the cross table being arranged on the sliding carriage,
wherein the cross table is preferably arranged on the sliding carriage so as to be pivotable about a substantially vertical table pivot axis,
and further preferably the cross table is designed as a parallelogram cross table and is arranged on the sliding carriage so as to be pivotable about the substantially vertical table pivot axis, the cross table preferably being fastened to the sliding carriage by means of two pivot joints,
and/or the cross table is arranged on the sliding carriage by means of a first coupling element, and the first coupling element is arranged on the sliding carriage such that it can be moved parallel to the working direction, the first coupling element preferably being guided on a sliding carriage rail, and furthermore preferably at least one clamping element being arranged on the first coupling element, which clamping element is designed to fix the first coupling element to the sliding carriage rail.

12. A woodworking machine according to any one of the preceding claims 10 or 11, **characterized in that**
the sliding carriage has a second workpiece support surface, arranged in alignment with the first workpiece support surface, for supporting the workpiece, and the stop rail is arranged so as to be pivotable about a vertical stop rail pivot axis,

13. A woodworking machine according to any one of the preceding claims 10-12, **characterized by**
a sensing device comprising
- a flap sensor to detect the first flap position and the second flap position and preferably the travel position of the stop flap, and/or
- a workpiece sensor to detect a workpiece at the first workpiece stop surface and/or at the second workpiece stop surface.

14. Woodworking machine according to any of the previous claims 11-13, comprising
a first control unit for controlling the stop flap pivot actuator,
wherein the first control unit is arranged to receive a workpiece position signal from the sensing device, the workpiece position signal characterizing a position of a workpiece at the first workpiece stop surface or the second workpiece stop surface, and
wherein the first control unit is further adapted to generate a first flap control signal when the workpiece position signal characterizes a workpiece position at the first workpiece stop surface, and to generate a second flap control signal when the workpiece position signal characterizes a workpiece position at the second workpiece stop surface,
wherein the stop flap pivot actuator is arranged to position the stop flap in the first flap position when the first flap control signal is received and in the second flap position when the second flap control signal is received.

15. A woodworking machine according to any one of the preceding claims 10-14, **characterized in that**
the woodworking machine comprises a circular saw blade, a rail actuator moving the stop rail in the longitudinal direction of the rail, and a second control unit, and the second control unit is arranged to determine a distance between the end of the stop rail facing the sliding carriage and the circular saw blade, and to control the rail actuator in such a way that contact between the stop rail and the circular saw blade is prevented.

16. Method for controlling a woodworking machine, in particular a sliding table saw, having a cross-cut table which has a stop rail (120) with a stop flap (140, 140', 142, 142'), comprising
generating (300) a workpiece position signal, the workpiece position signal characterizing a position of a workpiece at a first workpiece stop surface (126) or at a second workpiece stop surface of the stop rail (120) disposed opposite the first workpiece stop surface,
generating (302) a first flap control signal when the workpiece position signal characterizes a workpiece position at the first workpiece stop surface (126) or generating a second flap control signal when the workpiece position signal characterizes a workpiece position at the second workpiece stop surface, and
positioning (304) the stop flap (140, 140', 142, 142') in a first flap position on a first side (112) of the stop rail when the first flap control signal is generated, and in a second flap position on a second side of the stop rail (120) opposite the first side, when the second flap control signal is generated, the stop flap preferably being in a traverse position when traversing along the stop rail (120), the traverse position being between the first flap position and the second flap position.

## Revendications

1. Table transversale (100, 100', 100") pour une machine d'usinage du bois (1), en particulier pour une scie circulaire à déligner, comprenant :
- un cadre de table transversale (102, 104, 170, 171),
- une première surface de réception de pièce (110a, 110b) située de manière horizontale,
- un rail de butée (120) fixé sur le cadre de table transversale au-dessus de la première surface de réception de pièce, avec
- - une première surface de butée de pièce (126) située de manière verticale sur un premier côté (112) du rail de butée, qui est disposé de telle sorte qu'une pièce en forme de panneau reposant dans une première zone de réception disposée de manière horizontale devant le rail de butée (120) sur la première surface de réception de pièce peut être placée par une arête latérale sur la première surface de butée de pièce (126),
- - une deuxième surface de butée de pièce située de manière verticale sur un deuxième côté (111), faisant face au premier côté (112), du rail de butée, dans laquelle la deuxième surface de butée de pièce est disposée de telle sorte qu'une pièce en forme de panneau reposant dans une deuxième zone de réception disposée de manière horizontale derrière le rail de butée sur la première surface de réception de pièce peut être placée par une arête latérale sur la deuxième surface de butée de pièce,
**caractérisée en ce que**
- la première surface de réception de pièce est formée par une surface de réception (110a, 110b) d'une barre d'appui (130, 132), et
- la barre d'appui est disposée de manière à pouvoir effectuer des mouvements de va-et-vient par rapport au cadre de table transversale si bien que la distance de l'extrémité de barre d'appui avant et de l'extrémité de barre d'appui arrière est variable par rapport au rail de butée (120), donc peut être agrandie ou diminuée.

2. Table transversale selon la revendication 1,
**caractérisée en ce que**
la barre d'appui peut être déplacée en va-et-vient entre
- une première position, dans laquelle la surface de réception de la barre d'appui est disposée de manière sensiblement horizontale devant le rail de butée et forme la première zone de réception, et
- une deuxième position, dans laquelle la surface de réception de la barre d'appui est disposée de manière sensiblement horizontale derrière le rail de butée et forme la deuxième zone d'appui.

3. Table transversale selon l'une quelconque des revendications précédentes,
**caractérisée en ce que**
la table transversale comprend un premier élément de couplage pour coupler la table transversale à un chariot de glissement d'une machine d'usinage du bois, dans laquelle le premier élément de couplage peut être guidé de manière horizontale de préférence sur un rail de chariot de glissement du chariot de glissement et comprend en outre de préférence au moins un élément de serrage pour bloquer le premier élément de couplage sur le rail de chariot de glissement.

4. Table transversale selon l'une quelconque des revendications précédentes,
**caractérisée en ce que**
la table transversale est réalisée en tant que table transversale en forme de parallélogramme.

5. Table transversale selon l'une quelconque des revendications précédentes,
**caractérisée en ce que**
la table transversale présente un premier élément de cadre transversal et un deuxième élément de cadre transversal, lesquels
- sont disposés de manière parallèle l'un par rapport à l'autre,
- sont disposés de manière espacée l'un de l'autre horizontalement, et
- sont couplés l'un à l'autre de manière à pouvoir être coulissés de manière parallèle l'un par rapport à l'autre **en ce que** le premier et le deuxième élément de cadre transversal sont reliés l'un à l'autre de manière articulée par l'intermédiaire d'un élément de cadre longitudinal,
dans laquelle le rail de butée s'étend de manière sensiblement parallèle par rapport au premier élément de cadre transversal et par rapport au deuxième élément de cadre transversal, et de préférence présente, par rapport au premier élément de cadre transversal et au deuxième élément de cadre transversal, une distance sensiblement aussi grande, dans laquelle de préférence
- le premier élément de cadre transversal et l'élément de cadre longitudinal sont reliés l'un à l'autre par une unité d'ajustement angulaire et l'unité d'ajustement angulaire est mise au point pour entraîner un pivotement du premier élément de cadre transversal par rapport à l'élément de cadre longitudinal et un coulissement parallèle du premier élément de cadre transversal par rapport au deuxième élément de cadre transversal, et
- l'au moins une barre d'appui est soutenue de manière verticale par le premier et le deuxième élément de cadre transversal.

6. Table transversale selon l'une quelconque des revendications précédentes,
**caractérisée par**
un élément de guidage, qui est réalisé pour guider la barre d'appui dans une direction horizontale,
dans laquelle de préférence l'élément de guidage est disposé sur le premier élément de cadre transversal et/ou sur le deuxième élément de cadre transversal.

7. Table transversale selon l'une quelconque des revendications précédentes,
**caractérisée en ce que**
la table transversale comprend deux barres d'appui ou plus, dans laquelle les deux barres d'appui ou plus sont tenues à distance l'une de l'autre de manière horizontale.

8. Table transversale selon l'une quelconque des revendications précédentes,
**caractérisée par** un élément coudé, qui est disposé sur une extrémité de table transversale par une première extrémité coudée de manière adjacente à une zone et une deuxième extrémité coudée est tenue à distance de l'extrémité de table transversale.

9. Table transversale selon l'une quelconque des revendications précédentes,
**caractérisée par**
un clapet de butée monté de manière à pouvoir être déplacé le long du rail de butée, qui présente une surface de clapet de butée située de manière verticale et dirigée de manière perpendiculaire par rapport à la première et/ou la deuxième surface de butée de pièce, et
de préférence un actionneur de pivotement de clapet de butée, qui est disposé et est réalisé pour déplacer le clapet de butée entre la première position de clapet et la deuxième position de clapet,
dans laquelle de préférence le clapet de butée peut être ajusté entre deux positions de clapet et est disposé dans une première position de clapet au-dessus de la première zone de réception et est disposé dans une deuxième position de clapet au-dessus de la deuxième zone de réception, dans laquelle de préférence le clapet de butée est disposé de manière rabattable autour d'un axe sensiblement horizontal entre les deux positions de clapet, et
dans laquelle l'actionneur de pivotement de clapet de butée est disposé et est réalisé de préférence pour déplacer le clapet de butée dans une position de déplacement, dans laquelle la position de déplacement est disposée entre la première position de clapet et la deuxième position de clapet, et de préférence le clapet de butée est orienté de manière verticale dans la position de déplacement.

10. Machine d'usinage du bois (1), en particulier scie circulaire à déligner, comprenant une table transversale (100, 100', 100") selon l'une quelconque des revendications précédentes, qui est montée sur un bâti de machine (10) de manière mobile par rapport à un outil le long d'une direction de travail (L).

11. Machine d'usinage du bois selon la revendication 10,
**caractérisée en ce que**
celle-ci présente un chariot de glissement pouvant être déplacé linéairement par rapport au bâti de machine, dans laquelle la table transversale est disposée sur le chariot de glissement,
dans laquelle la table transversale est disposée sur le chariot de glissement de manière à pouvoir pivoter de préférence autour d'un axe de pivotement de table sensiblement vertical,
et de préférence la table transversale est réalisée en tant que table transversale en forme de parallélogramme et est disposée sur le chariot de glissement de manière à pouvoir pivoter autour de l'axe de pivotement de table sensiblement vertical, dans laquelle de préférence la table transversale est fixée sur le chariot de glissement au moyen de deux articulations de rotation,
et/ou la table transversale est disposée sur le chariot de glissement au moyen d'un premier élément de couplage et le premier élément de couplage est disposé sur le chariot de glissement de manière à pouvoir être déplacé de manière parallèle par rapport à la direction de travail, dans laquelle de préférence le premier élément de couplage est guidé sur un rail de chariot de glissement et en outre de préférence au moins un élément de serrage est disposé sur le premier élément de couplage, qui est réalisé pour bloquer le premier élément de couplage sur le rail de chariot de glissement.

12. Machine d'usinage du bois selon l'une quelconque des revendications précédentes 10 ou 11,
**caractérisée en ce que**
le chariot de glissement présente une deuxième surface de réception de pièce en alignement par rapport à la première pour réceptionner la pièce et le rail de butée est disposé de manière à pouvoir pivoter autour d'un axe de pivotement de rail de butée vertical.

13. Machine d'usinage du bois selon l'une quelconque des revendications 10 - 12,
**caractérisée par**
un dispositif d'identification comprenant
- un capteur de clapet pour identifier la première position de clapet et la deuxième position de clapet et de préférence la position de déplacement du clapet de butée, et/ou
- un capteur de pièce pour identifier une pièce sur la première surface de butée de pièce et/ou sur la deuxième surface de butée de pièce.

14. Machine d'usinage du bois selon l'une quelconque des revendications précédentes 11 - 13, comprenant une première unité de commande pour commander l'actionneur de pivotement de clapet de butée,
dans laquelle la première unité de commande est mise au point pour recevoir un signal de position de pièce du dispositif d'identification, dans laquelle le signal de position de pièce caractérise un positionnement d'une pièce sur la première surface de butée de pièce ou la deuxième surface de butée de pièce, et
dans laquelle la première unité de commande est mise au point en outre pour générer un premier signal de commande de clapet lorsque le signal de position de pièce caractérise une position de pièce sur la première surface de butée de pièce, et pour générer un deuxième signal de commande de clapet lorsque le signal de position de pièce caractérise une position de pièce sur la deuxième surface de butée de pièce,
dans laquelle l'actionneur de pivotement de clapet de butée est mis au point pour positionner le clapet de butée dans la première position de clapet lorsque le premier signal de commande de clapet est reçu et pour le positionner dans la deuxième position de clapet lorsque le deuxième signal de commande de clapet est reçu.

15. Machine d'usinage du bois selon l'une quelconque des revendications 10 - 14,
**caractérisée en ce que**
la machine d'usinage du bois présente une lame de scie circulaire, un actionneur de rail déplaçant le rail de butée dans le sens longitudinal de rail et une deuxième unité de commande, et
la deuxième unité de commande est mise au point pour définir un espacement de l'extrémité, tournée vers le chariot de glissement, du rail de butée par rapport à la lame de scie circulaire pour commander l'actionneur de rail de telle manière qu'un contact entre le rail de butée et la lame de scie circulaire est empêché.

16. Procédé pour commander une machine d'usinage du bois, en particulier une scie circulaire à déligner, avec une table transversale, qui présente un rail de butée (120) avec un clapet de butée (140, 140', 142, 142'), comprenant
la génération (300) d'un signal de position de pièce, dans lequel le signal de position de pièce caractérise un positionnement d'une pièce sur une première surface de butée de pièce (126) ou sur une deuxième surface de butée de pièce, disposée de manière à faire face à la première, du rail de butée (120),
la génération (302) d'un premier signal de commande de clapet lorsque le signal de position de pièce caractérise une position de pièce sur la première surface de butée de pièce (126) ou la génération d'un deuxième signal de commande de clapet lorsque le signal de position de pièce caractérise une position de pièce sur la deuxième surface de butée de pièce, et
le positionnement (304) du clapet de butée (140, 140', 142, 142') dans une première position de clapet sur un premier côté (112) du rail de butée lorsque le premier signal de commande de clapet est généré, et dans une deuxième position de clapet sur un deuxième côté, faisant face au premier côté, du rail de butée (120) lorsque le deuxième signal de commande de clapet est généré, dans lequel le clapet de butée se trouve lors d'un déplacement le long du rail de butée (120) de préférence dans une position de déplacement, dans lequel la position de déplacement se trouve entre la première position de clapet et la deuxième position de clapet.
